Europäisches Patentamt

European Patent Office

Office européen des brevets

(19)

(11) Veröffentlichungsnummer: **0 308 806 B1**

(12)

# EUROPÄISCHE PATENTSCHRIFT

(45) Veröffentlichungstag der Patentschrift: **30.03.94**

(51) Int. Cl.⁵: **F24D 19/10**, G05D 23/20

(21) Anmeldenummer: **88115077.5**

(22) Anmeldetag: **15.09.88**

(54) **Verfahren zur sich selbsttätig anpassenden Steuerung der Temperatur mindestens eines Gebäuderaumes.**

(30) Priorität: **21.09.87 DE 3731687**

(43) Veröffentlichungstag der Anmeldung:
**29.03.89 Patentblatt 89/13**

(45) Bekanntmachung des Hinweises auf die
Patenterteilung:
**30.03.94 Patentblatt 94/13**

(84) Benannte Vertragsstaaten:
**AT BE CH DE FR GB LI NL**

(56) Entgegenhaltungen:
DE-A- 2 809 770
DE-A- 3 210 428
DE-A- 3 502 873
DE-B- 2 813 081

(73) Patentinhaber: **Knoll, Alois L., Dr.**
**Postfach 12 24**
**D-71095 Schönaich(DE)**

(72) Erfinder: **Knoll, Alois L., Dr.**
**Kimbernstrasse 4**
**D-7036 Schönaich(DE)**
Erfinder: **Knoll, Alois Ch., Dipl.-Ing.**
**Schillerstrasse 82**
**D-1000 Berlin 12(DE)**

EP 0 308 806 B1

**Beschreibung**

In der DE-C-2813 081 ist eine Anordnung beschrieben, bei welcher unter anderem eine aus Exponentialfunktionen zusammengesetzte Kennlinie für die Schnellaufheizung mindestens eines Raumes eines Gebäudes benutzt wird. Mit dieser Kennlinie wird der Einschaltzeitpunkt für die maximale Energiezufuhr in eine Heizungsanlage so festgelegt, daß die abgekühlte Raumluft zu einem vorgegebenen Zeitpunkt auf eine gewünschte Temperatur erwärmt wird. Um die Raumlufttemperatur überwachen und steuern zu können, wird sie in einem sogenannten Testraum oder Bezugsraum gefühlt.

Die EP-A-0013 287 behandelt eine ähnliche Aufgabenstellung. Die Kennlinie für die Schnellaufheizung wird dadurch gewonnen, daß Meßwerte der Raumlufttemperatur und Außentemperatur während der Auskühlung des Testraumes und während der Schnellaufheizung gespeichert und ihre Verläufe mit früheren Verläufen verglichen werden. Stimmt die neue Aufheizzeit mit der vorher benutzten nicht überein, wird sie mit einem Teil der Differenz geändert. Die Anordnung für die Steuerung der Schnellaufheizung ist ein unabhängiges Zusatzgerät und ergänzt damit ein zweites Gerät für die Steuerung der Raumlufttemperatur während der Belegungszeit des Gebäudes.

In der DE-A-3502 873 wird unter anderem ein Verfahren zur selbsttätigen Anpassung der Heizkennlinie für die Steuerung der Raumlufttemperatur während der Belegungszeit des Gebäudes angegeben. Angepaßt wird die Steigung einer Sehne der Heizkurve aufgrund von Meßwerten der Außentemperatur und der Raumlufttemperatur.

In der DE-A-3210 428 wird ein Verfahren zur Optimierung der Heizkennlinie für die Steuerung der Raumlufttemperatur während der Belegungszeit des Gebäudes angegeben, bei dem aus den gemessenen Augenblickswerten von Raumlufttemperatur, Außentemperatur und Vorlauftemperatur mit Hilfe eines statistischen Ausgleichsverfahrens die Heizkennlinie näherungsweise berechnet wird. Die Berechnung der Heizkennlinie wird durch ein separates elektronisches Gerät vorgenommen, das nur zeitweise an das Steuer- oder Regelgerät der Heizungsanlage angeschlossen wird.

In allen bekannten Verfahren wird die Raumlufttemperatur in mindestens einem Raum des Gebäudes, dem Testraum, gefühlt. Die Genauigkeit des Verfahrens hinsichtlich der Steuerung der Raumlufttemperatur im ganzen Gebäude wird damit abhängig von der Übereinstimmung der Raumlufttemperatur im Testraum, oder dem Mittelwert aus mehreren Testräumen, mit der Raumlufttemperatur in allen Räumen des beheizten Gebäudes. Alle Einflüsse auf die Raumlufttemperatur des Testraumes durch Sonneneinstrahlung, durch gewollte oder zufällige Belüftung, durch die Entwicklung von Fremdwärme durch Personen oder Geräte und durch die zeitabhängige Temperatur der Wände und sonstigen Speichermassen erzeugen damit Meßfehler, die sich auf die Steuerung der Raumlufttemperatur für alle anderen Räume auswirken.

Unter stationärem Zustand wird im folgenden, verstanden, daß sich die gefühlten Größen Außentemperatur A, Raumlufttemperatur I, Rücklauftemperatur R und Vorlauftemperatur V abhängig von der Zeit nicht ändern oder nahezu nicht ändern. Unter quasistationärem Zustand wird verstanden, daß sich eine oder mehrere dieser Größen innerhalb eines beschränkten Zeitintervalles nahezu nicht ändern. Beim intermittierenden Heizen treten in der Regel nur quasistationäre Zustände auf. Quasistationäre Zustände werden im folgenden auch durch gleitende Mittelwertbildung von periodischen Vorgängen gebildet. Beispielsweise werden die Schwankungen der Vorlauftemperatur von etwa $4°C$, die durch einen mechanischen Kesselthermostaten verursacht werden, im Mittelwert auf etwa $0,3°C$ reduziert. Der Einfachheit halber soll aber im folgenden nur von stationären Zuständen gesprochen werden, auch wenn es sich streng genommen um quasistationäre handelt.

Die Abtastzeit ist die Zeit zwischen zwei punktweisen Messungen einer kontinuierlichen physikalischen Größe. Wird eine solche Messung in gleichen Zeitabständen wiederholt, wird von einer Abtastperiode gesprochen.

Unter Heizlast wird im folgenden die Wärmeleistung verstanden, welche von der Wärmequelle an die Heizungsanlage und an die Räume abgegeben wird, einschließlich der Wärme, die in speichernde Massen wie Wände, Wärmeträger, Einrichtungsgegenstände usw. fließt. Die Heizlast berücksichtigt beispielsweise, ob alle Räume eines Gebäudes oder Gebäudeteiles voll beheizt werden, oder ob ein Teil der Räume ganz abgeschaltet oder durch Thermostatventile mit tieferer Sollwerttemperatur beheizt wird. Ein Mindestdurchfluß des Wärmeträgers im Heizkreis wird dabei vorausgesetzt.

Unter äquivalenter Wandtemperatur wird im folgenden der Mittelwert der Temperaturen aller gebäuderaumseitigen Wandoberflächen der Gebäudemassen einschließlich der Oberflächen aller wärmespeichernden Einrichtungsgegenstände der vom Heizkreis beheizten Gebäuderäume verstanden. Sie wird im folgenden abgekürzt Wandtemperatur (M) genannt.

Die Behaglichkeitstemperatur ist für Raumlufttemperaturen in der Umgebung von $20°C$ mit guter Näherung der arithmetische Mittelwert von Raumlufttemperatur und äquivalenter Wandoberflächentempera-

2

tur.

Unter Ereignismittelwert wird im folgenden der arithmetische Mittelwert von Rechenwerten oder Meßwerten verstanden, die unter bestimmten Bedingungen gewonnen und ausgewertet werden. Beispiel: sH.

Es ist die Aufgabe der Erfindung, Verfahren nach dem Oberbegriff von Anspruch 1 und 2 zu treffen, die eine Heizungssteuerung selbsttätig an unterschiedliche Heizungsanlagen, an unterschiedliche Gebäude, und an unterschiedliche Klimaverhältnisse anpassen, mit dem Ziel, bei minimalem Verbrauch von Wärmeenergie die Raumlufttemperatur so zu steuern, daß ihre Abweichung von allen vorbestimmten und berechneten Sollwerten innerhalb kleiner Toleranzen bleibt.

Diese Aufgabe wird durch die in Anspruch 1 und 2 angegebene Erfindung gelöst.

Die erfindungsgemäßen Verfahren bestimmen selbsttätig die Parameter physikalisch bedingter Funktionen und dadurch mit wenigen Messungen eine ganze Kennlinie für eine individuelle Anlage. Die Auswertung der Messungen der Außentemperatur, der Vorlauftemperatur, der Rücklauftemperatur, sowie unter bestimmten Bedingungen der Raumlufttemperatur, wird nicht dem Zufall überlassen, sondern nur dann vorgenommen, wenn die Messungen unter bestimmten Bedingungen gewonnen wurden, deren Toleranzen je nach Verwendungszweck der Meßdaten abgestuft sind. So ist es auch möglich, nicht nur anlagen- und gebäudespezifische Daten zu berücksichtigen, sondern auch die klimatischen Verhältnisse.

Angesichts der Tatsache, daß ein Mikroprozessor zur Zeit etwa soviel kostet wie zehn Liter Heizöl, amortisiert sich der zusätzliche Geräteaufwand für die genaue Berechnung der Heizkennlinie, und damit die genaue Steuerung der Raumlufttemperatur, in kurzer Zeit durch die erzielte Einsparung von Energie.

Die Anlage läßt sich besonders leicht bedienen, da sie sich selbsttätig auf optimierten Verbrauch von Heizernergie einstellt, sie ist einfach zu installieren, da sie - wie unten beschrieben - ohne Fühler für die Raumlufttemperatur auskommt und sie läßt sich kostengünstig realisieren, da sie alle Funktionen des intermittierenden Heizens in einer kompakten Anlage zusammenfaßt.

Die Anlage benötigt als Einstellelemente für die beschriebenen Verfahren nur je ein Einstellelement für die beiden Sollwerte der Raumlufttemperatur (W) und (K) sowie die Einstellelemente zur Eingabe der Schaltzeiten für den Beginn (C) und das Ende (S) des ersten Zeitintervalles und der Echtzeit. Im ersten Zeitintervall wird das Gebäude genutzt und die Raumlufttemperatur mit dem Sollwert (W) gesteuert.

Jedes der Verfahren erreicht die Minimierung der Heizenergie, weil es je nach Betriebsart die Heizzeit auf ein Minimum beschränkt, während der Belegungszeit des Gebäudes die vorbestimmte Raumlufttemperatur abhängig von der Außentemperatur und abhängig von der Heizlast mit kleiner Toleranz einhält, während der Stützung die niedrigste Vorlauftemperatur einhält, die physikalisch möglich ist, sowie die Wärmeabgabe der Gebäudemassen und anderer speichernder Massen optimal ausnützt.

Nach den Verfahren werden die meisten Messungen und Berechnungen zur Anpassung der Heizkennlinie und zur Anpassung der Schnellaufheizkennlinie in vorteilhafter Weise während des Zwischenzeitintervalles durchgeführt. Das Zwischenzeitintervall, während welchem die Energiezufuhr zu den Gebäuderäumen reduziert wird, liegt zwischen je zwei ersten Zeitintervallen. Für gute Meßergebnisse ist es vorteilhaft, das Zwischenzeitintervall in die Nachtzeit zu legen, weil dann störende Einflüsse durch Sonneneinstrahlung, fluktuierende Benutzung des Gebäudes usw. nicht auftreten.

Durch die Verfahren wird die Heizkennlinie sukzessive an die Heizungsanlage, an das Gebäude und an die Klimazone angepaßt. Aufgrund der Tatsache, daß jede Heizkennlinie ihren Ursprung am Punkt I = A = V hat, nämlich dort, wo die Raumlufttemperatur (I), die Außentemperatur (A) und die Vorlauftemperatur (Vist) gleich sind, findet an diesem Punkt kein wesentlicher Energieaustausch zwischen den Räumen und der Außenluft und zwischen der Raumluft und dem Wärmeträger im Heizungsvorlauf und Heizungsrücklauf statt.

Durch die Verfahren werden alle Parameter der Heizkennlinie bestimmt, zunächst B0, F0, s0 nach relativ kurzer Heizzeit, dann mH im zweiten Exponenten von B0 nach einer Mittelwertbildung mehrerer gefilterter Faktoren F0, und schließlich AH, nachdem die tiefste Außentemperatur oder die größte Heizlast mindestens einer Heizperiode aufgetreten ist.

Durch die Verfahren wird während des Zwischenzeitintervalles der Mittelwert der Raumlufttemperatur aller beheizten Räume des Gebäudes berechnet, angefangen vom Zeitpunkt (S) bis zum Beginn der Schnellaufheizung. Außerdem wird der Beginn der Stützung gesteuert und der Sollwert der Vorlauftemperatur für die Einhaltung des vorbestimmten Sollwertes (K) oder des berechneten höheren Sollwertes für die Stützung der Wandtemperatur (M) berechnet. Erfindungsgemäß nimmt die Vorlauftemperatur (V) bei der Stützung der Raumlufttemperatur (I) immer ihren zulässigen Minimalwert ein, und sie steigert sich für diesen Zeitbereich nach Maßgabe der Außentemperatur, sowie der Wärmeabgabe der wärmespeichernden Gebäudemassen und Einrichtungsgegenstände, bis zum stationären Wert der Vorlauftemperatur für den Sollwert (K) der Raumlufttemperatur.

Mit den Verfahren wird die maximal verfügbare Vorlauftemperatur VX und die maximal verfügbare Rücklauftemperatur RX, sowie der Zeitbedarf für den Anstieg der Rücklauftemperatur (R) während der Schnellaufheizung berechnet und für die SCHNELLAUFHEIZKENNLINIE die Anpassung an die Heizungsanlage, an das Gebäude und an die Klimabedingungen vorgenommen.

Die Verfahren vermeiden auch die Nachteile, die durch das Fühlen der Raumlufttemperatur in einem oder mehreren Testräumen entstehen. Durch die Auswertung der Rücklauftemperatur ermitteln die Verfahren auf sehr vorteilhafte Weise den Mittelwert des Temperaturzustandes und der Heizlast für alle vom Heizkreis beheizten Räume des Gebäudes.

Trotzdem lassen die Verfahren auch zu, daß die Raumlufttemperatur gefühlt - statt berechnet - wird, beispielsweise wenn das Gebäude einen hinsichtlich des Volumens und der Temperaturverhältnisse eindeutig dominierenden Raum besitzt. Vorteile für diesen Fall sind kürzere Meßzeiten für die Bestimmung von Parametern, beispielsweise B0, F0, s0, sowie kürzere Laufzeiten für die Heizkreispumpe. Als Alternative zur SCHNELLAUFHEIZKENNLINIE werden erfindungsgemäß die Parameter der EINSCHALTTEMPERATUR-KENNLINIE für die Schnellaufheizung berechnet, wahlweise ohne die Verwendung eines Fühlers für die Wandtemperatur.

Die Verfahren sollen nun näher erläutert werden. Dabei wird die Reihenfolge der Vorgänge etwa so gewählt, wie sie bei der Neuinstallation der Anlage in der Heizungsanlage oder auch beim Neustart nach langfristiger Abschaltung der Spannungsversorgung auftritt, sofern die Langzeitwerte sH, mH, In-AH, BH, FH, (1-1/BH)/FH nicht dauerhaft gespeichert worden sind.

In der Zeichnung zeigen

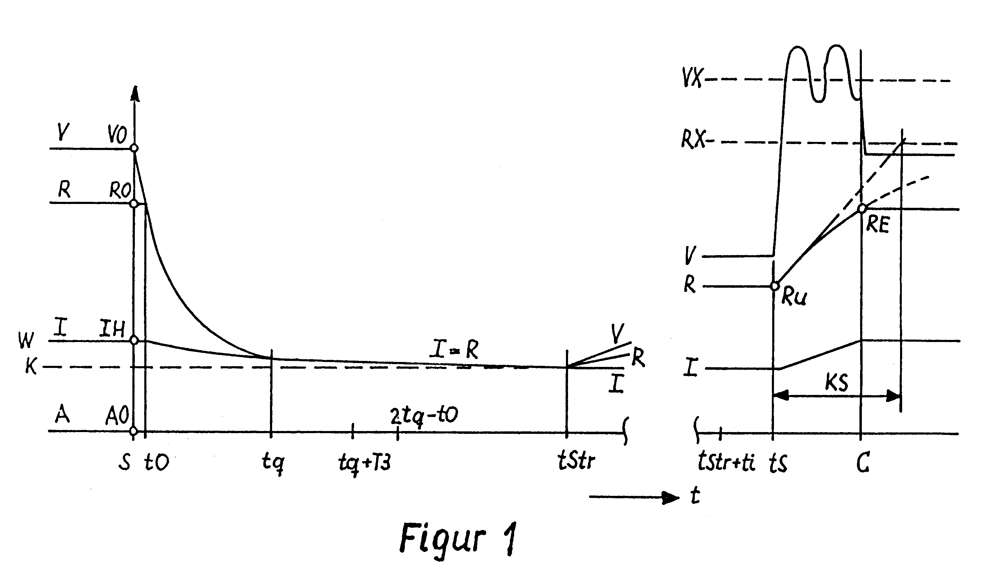

Figur 1     ein Diagramm der Zeitintervalle

Figur 2     die Heizkennlinie mit Normwerten nach DIN 4703 und mit dem Faktor F0 = 0,6

Figur 3     die Bestimmung von mH und die Bereichseinteilung der Außentemperatur, Kennzeichnung der Meßpunkte mit x und des berechneten Wertes mit o

Figur 4     die Bestimmung von AH

Figur 5     ein Zeitdiagramm zur Stützung der Raumlufttemperatur

Figur 6     ein Zeitdiagramm zur Stützung der Wandtemperatur (M)

Figur 7     die Heizkennlinien zur Berechnung der Stütztemperaturen ISt und IStb für die Stützung der Wandtemperatur (M)

Figur 8     ein Zeitdiagramm für die Schnellaufheizung ohne vorhergehende Stützung

Figur 9     Kennlinien der Rücklauftemperaturen zur Berechnung der Schnellaufheizkennlinie mit dem Sollwert W = In und eingetragener Wanderung der Werte für RX, RE bei Änderung der Außentemperatur während der Schnellaufheizung von A(tS) nach A(C) > A(tS) sowie nach AH < A(tS)

Figur 10     ein Blockbild für die erfindungsgemäße Anlage 1 im Zusammenhang mit der Heizungsanlage 2.

Die Heizkennlinie für die Verfahren nach dem Oberbegriff des Anspruches 1 leitet sich aus physikalischen Gründen aus der Gleichung für den Sollwert der Vorlauftemperatur V ab.

$$V = I + \frac{sn*(I-A)}{1 - Bn^{-((I-A)/(In-An))^{(1-1/mi)}}} * Fi \qquad (11)$$

mit I = W sowie allgemein A < W und W-A < In-An

und sn nach Gleichung (1.3), Bn nach Gleichung (1.4),

und den Ersatzwerten An, In, Rn, Vn, Fi, mi am Ende der Beschreibung.

Eine vollständige Liste der Symbole und die wichtigsten Ersatzwerte sind am Schluß der Beschreibung aufgeführt. Das Symbol * bedeutet Multiplikation. Klammerausdrücke hinter den Symbolen der abhängigen Variablen stellen den Wert der unabhängigen Variablen dar, beispielsweise R(j*T1), R((j+1)*T1). Gleichungen (1.1) bis (10.7) sind in den Ansprüchen 1 bis 2 aufgeführt.

In Gleichung (11) ist die Umrechnung der Wärmeleistung von Raumheizkörpern auf andere Heizmittel und Raumlufttemperaturen sowie der Einfluß der Temperaturdifferenz Vorlauf minus Rücklauf (Temperaturspreizung) auf die Wärmeleistung nach dem Normblatt DIN 4703 berücksichtigt. Nach dieser Norm werden in ihrem Geltungsbereich seit längerer Zeit die Heizungsanlagen berechnet und gebaut. Es ist deshalb zweckmäßig, beim Bau von Anlagen zur Durchführung der Verfahren die Konstanten Bn, sn, mi, In-An, Fi als Anfangswerte oder Ersatzwerte zu verwenden.

4

Bei Gebäuden sind je nach Baujahr, Verwendungszweck, Aufwand usw. große Unterschiede in ihrem thermischen Verhalten festzustellen. Deshalb ist nach der Erfindung der Faktor Fi in die Gleichung (11) eingefügt. Sein Anfangswert kann mit Fi = 1 oder mit einem Erfahrungswert des Herstellers der Anlage eingegeben werden. In der Temperaturdifferenz In-An bedeutet (In) den Bezugswert der Raumlufttemperatur (I) und (An) ist die tiefste Außentemperatur, bei welcher die Raumlufttemperatur (In) eingehalten werden kann. Der Sollwert (W) für die Raumlufttemperatur wird vom Benutzer der Anlage vorbestimmt.

Das erfindungsgemäße Meßprinzip besteht darin, die Anlage vorzugsweise im ersten Zeitintervall zu betreiben, bis sich ein hinreichend stationärer Zustand für den gleitenden Mittelwert der Vorlauftemperatur (Vist), für den gleitenden Mittelwert der Rücklauftemperatur (R) und möglichst auch für die Außenlufttemperatur (A) eingestellt hat. Diese Bedingungen werden beispielsweise erfüllt, wenn ein Gebäude mittelschwerer Bauweise etwa fünf Stunden mit unverändertem Sollwert (W) beheizt wird und wenn bei klarer Witterung etwa zwei Stunden nach Sonnenuntergang vergangen sind. Bezüglich der Konstanz der Außentemperatur kann bei der Erstinstallation eine merklich größere Toleranz zugelassen werden, als bei wiederholten Messungen dieser Art, nachdem schon eine gute Konvergenz für die Paramter F0, B0, s0, mH erreicht worden ist. Bei Gebäuden, deren Innenwände eine Temperatur wesentlich niedriger als (W) angenommen haben, empfiehlt es sich, die erste Absenkung erst nach mehreren Tagen Heizzeit vorzunehmen.

Die Vorlauftemperatur (Vist) wird auf ihren Sollwert (V) geregelt und stellt sich damit, verglichen mit der Rücklauftemperatur (R) und der Raumlufttemperatur (I), am schnellsten und auch am genauesten ein, vorausgesetzt, daß der Wärmeerzeuger für die bestehende Außentemperatur und den eingestellten Sollwert (W) hinreichend Leistung liefert. Damit kann die Vorlauftemperatur als eingeprägt angesehen werden und die Rücklauftemperatur und Raumlufttemperatur stellen sich aufgrund der thermischen Eigenschaften der Heizungsanlage und des Gebäudes ein.

Wenn die Raumlufttemperatur I0 gemessen und nach den Verfahren ausgewertet wird, kann immer dann, wenn die Bedingungen für den stationären Betrieb erfüllt sind, die Berechnung der Parameter F0, B0, s0 vorgenommen werden. Wird jedoch die gemessene Raumlufttemperatur I0 wegen der eingangs genannten Nachteile nicht zur Berechnung der Parameter F0, B0, s0 verwendet, dann wird I0 während des Zwischenzeitintervalles berechnet. In beiden Fällen wird das erste Zeitintervall beendet durch Umschaltung auf das Zwischenzeitintervall, was beispielsweise durch die entsprechende Einstellung der Schaltuhr bewerkstelligt wird.

Der Parameter F0 folgt der Gleichung (1.5), wobei N nach Gleichung (1.2) mit I = IH berechnet wird, mit 80 nach Gleichung (1.4), mit IH nach Gleichung (1.6) und (1.7), sowie den Ersatzwerten An für AH und mi für mH. Die Raumlufttemperaturen I0 und IH unterscheiden sich dadurch, daß I0 mit dem Augenblickswert des Parameters s0 berechnet wird oder gemessen wird, während IH mit dem Anfangswert sn, oder, wie unten beschrieben wird, mit dem gebäudebezogenen Mittelwert sH berechnet wird. Dadurch wird die augenblickliche Heizlast berücksichtigt. Die Werte V0, R0, A0 werden gleichzeitig gemessen, beispielsweise gegen Ende des ersten Zeitintervalles. Die Raumlufttemperatur I0 ist zu diesem Zeitpunkt zur Berechnung von IH nur bekannt, wenn sie gemessen wird. Ansonsten wird sie aus der Rücklauftemperatur berechnet, wie weiter unten beschrieben wird.

Die Definition der erfindungsgemäßen Parameter B0, F0, s0 ist für den stationären Zustand zulässig, weil dann die Wärmeleistung der Heizungsanlage gleich ist mit der Wärmeleistung, welche vom Innern des Gebäudes an die Außenluft gelangt.

Zum bisherigen Verfahren noch zwei Bemerkungen:

1) Wenn sich nach dem oben genannten Einschalten der neu installierten Anlage eine wesentlich zu hohe Vorlauftemperatur einstellt, was insbesondere bei Fußbodenheizungen nicht zugelassen werden darf, dann braucht nur der Sollwert W mit einem tieferen Wert eingegeben werden. Nach der Berechnung von F0, B0, s0 kann der ursprünglich gewünschte Sollwert (W) wieder eingegeben werden, vorzugsweise nach dem Beginn des Zwischenzeitintervalles.

2) Sollte sich jedoch nach dem oben genannten Einschalten eine wesentlich zu niedrige Raumlufttemperatur einstellen, so braucht nur der Sollwert W mit einem höheren Wert eingegeben werden; auch hier während des Zwischenzeitintervalles wieder die Eingabe des gewünschten Sollwertes (W). In beiden Fällen ist es aber wesentlich, darauf zu achten, daß von der letzten Einstellung des Sollwertes W bis zum Umschalten auf das Zwischenzeitintervall genügend Zeit zum Erreichen des oben genannten stationären Zustandes verbleibt.

Die Raumlufttemperatur I0 wird nach den Verfahren aus der Rücklauftemperatur berechnet, wie aus dem Text im Anschluß an Gleichung (1.7) und aus den Gleichungen (2.1)...(2.7) in Anspruch 1 hervorgeht. Nach dem Zeitpunkt t0 + KR hat sich der bei t0 gemessene Unterschied zwischen Rücklauftemperatur (R) und Raumlufttemperatur (I) auf etwa 37%, genau auf exp(-1), verringert. Nach dem Zeitpunkt t0 + 4*KR ist er 1.8%, nach t0 + 5*KR noch 0,7%.

Die Berechnung der Zeitkonstante KR nach Gleichung (2.3) erfolgt mit dem Meßwert dR(ta) des steilsten Absinkens der Rücklauftemperatur (R) und dem Meßwert dR(te) nach Gleichung (2.2), der etwa den Halbwert von dR(ta) darstellt. Der Zeitbedarf für die Messung dieser beiden Werte ist damit etwa 70% der Zeitkonstanten KR. In dieser Zeit kühlen die Gebäuderäume so wenig aus, daß auch bei tiefen Außentemperaturen diese Messung durchgeführt werden kann, wenn anschließend wieder entsprechend der Außentemperatur geheizt wird. Die Meßzeit könnte im Bedarfsfall auch noch verkürzt werden, allerdings unter Inkaufnahme eines etwas größeren Meßfehlers.

Damit ist die letzte Größe berechnet, die zur Berechnung von IH, B0, F0, s0 der Gleichungen (1.1), (1.2) benötigt wird. Für ein Gebäude mittelschwerer Bauweise findet diese Rechnung etwa ein bis zwei Stunden nach Beginn des Zwischenzeitintervalles statt.

Nach der ersten Bestimmung von F0, B0, s0 wird mit den Gleichungen (1.1), (1.2) der Sollwert der Vorlauftemperatur bei den angegebenen Betriebsarten berechnet. Darüber hinaus werden bei jedem Übergang vom ersten Zeitintervall zum Zwischenzeitintervall diese drei Parameter neu bestimmt, sofern im ersten Zeitintervall die Größen Vist-V, R und A hinreichend stationär sind. Dadurch kann die Heizkennlinie nahezu täglich an die Heizlast und an das Gebäude angepaßt werden, insbesondere an die Reaktion des Gebäudes auf die Klimabedingungen.

Bei der Berechnung des Parameters sH kann man davon ausgehen, daß die Heizlast eines Gebäudes oder Gebäudeteiles bei tiefen Außentemperaturen mit höchster Wahrscheinlichkeit der Nennlast entspricht, die für das Gebäude und seine Heizungsanlage charakteristisch ist. Bei tiefen Außentemperaturen und geschlossener Wolkendecke ist auch die Drosselwirkung von Thermostatventilen im Jahreszeitenvergleich am kleinsten. Darum wird in der unteren Hälfte des Außentemperaturbereiches der Häufigkeitsschwerpunkt für den Parameter s0 gebildet und damit nach Gleichung (1.7) der angepaßte Parameter sH berechnet. Dieser Mittelwert sH wird fortlaufend gebildet um zu gewährleisten, daß in jeder Heizperiode der Parameter sH an die Gebäude- und Betriebseigenschaften angepaßt wird.

Die Berechnung der Mittelwerte von F0, B0 kann ähnlich vorgenommen werden. Für die erfindungsgemäße Mittelwertbildung der Parameter F0, B0 ist es zweckmäßig, diese Mittelwerte für getrennte Außentemperaturbereiche vorzunehmen. Vorteilhaft ist es, den Nennbereich der Temperaturdifferenz In-An in drei bis vier Teilbereiche aufzuteilen und den oberen Teilbereich 3...5°C unterhalb des Ursprunges der Heizkurven abzuschließen. Für jeden Teilbereich werden in einem separaten Speicher die mit kleinen Toleranzen gemessenen Parameter F0, B0 und die laut Gleichung (1.5) zugeordneten Außentemperaturen A0 gespeichert und ihre Mittelwerte gebildet und gespeichert,

$$FH(b) = (F01 + F02 + ... + F0p)/p \qquad (12.1)$$

$$BH(b) = (B01 + B02 + ... + B0p)/p \qquad (12.2)$$

$$AF(b) = (A01 + A02 + ... + A0p)/p \qquad (12.3)$$

$$(1-1/BH)/FH = ((1-1/B01)/F01 + ... + (1-1/B0p)/F0p)/p \qquad (12.4)$$

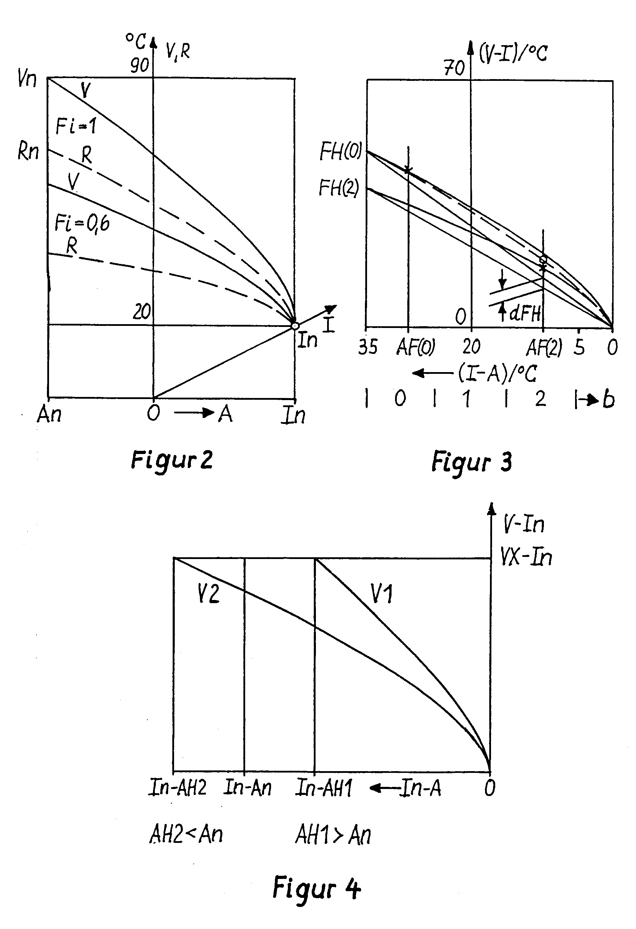

vorteilhaft mit wachsender Summandenzahl bis etwa $p = 5$ und mit $b = 0, 1, 2$ für drei Außentemperaturbereiche. Dem Mittelwert FH(0) wird bei weiterer Verwendung der Mittelwert AF(0) zugeordnet und ähnlich für die anderen Indizes b. Hierzu Figur 3.

Wenn in den verschiedenen Außentemperaturbereichen mit dem Schwerpunkt AF(b) verschiedene Parameter FH(b) auftreten, lassen sie sich durch die Anpassung des Exponenten (1-1/mH) angleichen. Dazu wird die partielle Ableitung des Hausfaktors F0' zunächst nach mi und dann nach mH für den höchsten verfügbaren Temperaturbereich AF(b + c) berechnet, mit dem Zuwachs dm multipliziert und dieses Produkt beispielsweise dem halben Unterschied des Parameters dFH an der Stelle des obersten AF(b + c) gleichgesetzt.

$$F0'dm = dFH/2 \qquad (13.1)$$

Die Ableitung des Parameters F0' nach dem Parameter mi wird nach Gleichung (4) berechnet.
Der Unterschied des Parameters FH lautet

$$dFH = (FH(b + 1) - FH(b))*AF(b + 1)/(In-An) \qquad (13.2)$$

Wenn verfügbar, können die weitest auseinander liegenden Mittelwerte FH verwendet werden, beispielsweise aus dem obersten und dem untersten Bereich AF(b). Sobald der Parameter AH verfügbar ist, wird In-AH an der Stelle von In-An eingesetzt. Damit wird der an das Gebäude und an die Heizungsanlage angepaßte Parameter mH nach Gleichung (3) berechnet.

Sobald zwei Mittelwerte nach Gleichung (12.1) mit einer vorbestimmten Mindestzahl p von Summanden verfügbar sind, kann mH berechnet werden. Im allgemeinen werden zunächst nur anliegende Temperaturbereiche AF(b), AF(b + 1) zur Verfügung stehen. Deshalb wird zusätzlich vorgeschrieben, daß die Mittelwerte AF mindestens etwa 10°C auseinander liegen. Bei dem beschriebenen Verfahren wird beispielsweise der Parameter FH der tieferen Außentemperatur beibehalten und die Krümmung an der Stelle des höchsten Mittelwertes der Temperatur AF(b + c) geändert. Der Parameter mH wird vorteilhafterweise nach unten und oben begrenzt, ebenso seine Änderungsschrittweite.

Die tiefste Außentemperatur AH für die Heizkennlinie bei der Raumlufttemperatur (In) wird mit Gleichung (5) an die Klimazone, sowie an die Heizungsanlage und an das Gebäude angepaßt, indem geprüft wird, bei welcher Außentemperatur AH die höchste verfügbare Vorlauftemperatur VX ausreicht, um die Raumlufttemperatur auf dem Bezugswert (In) halten zu können. Hierzu Figur 4.

Der Schnittpunkt der Heizkennlinie mit ihrer Sekante ist in Figur 3 dargestellt. In diesem Schnittpunkt ist der erste Exponent zur Basis BH

$$(I-A)/(In-AH) = 1, \quad \text{und folglich} \quad BH^{xH-1} = 1/BH$$

für alle Werte von mH und mi.

Dabei wird der Ausdruck (1 - 1/BH)/FH durch die Mittelwertbildung von mehreren Ausdrücken (1 - 1/B0)/F0 mit jeweils im untersten Außentemperaturbereich gleichzeitig gemessenen Paaren von B0, F0 nach Gleichung (12.4) gewonnen.

Für AH < An wird An durch AH nur dann ersetzt, wenn die tiefste gemessene Außentemperatur dies erfordert, weil sie beispielsweise tiefer liegt als An = -15°C. Wenn aber AH > An ist, dann wird An durch AH ersetzt, um den zu großen Temperaturbereich In-An zu korrigieren. Dies tritt beispielsweise auf, wenn die verfügbare Vorlauftemperatur niedriger ist als der Normwert von 90°C oder wenn die Wände des Gebäudes einen hohen Wärmedurchgang zulassen. Die Berechnung von AH wird nach Änderung der gebäudespezifischen Werte sH, (1-1/BH)/FH wiederholt.

Unter der Voraussetzung, daß die Bedingungen für den stationären Zustand gegen Ende des ersten Zeitintervalles erfüllt sind, können die kurzfristigen Parameter B0, F0, s0, mH während nahezu jedem Zwischenzeitintervall berechnet werden oder bei Verwendung eines Fühlers für die Raumlufttemperatur während des ersten Zeitintervalles berechnet werden. Sie berücksichtigen die Heizlast, welche insbesondere durch die Einstellung der Heizungsanlage bestimmt wird und von der Wandtemperatur (M) beeinflußt wird. Die langfristigen Parameter AH, BH, FH, (1-1/BH)/FH, sH, VX sind vorteilhaft bei Außentemperaturen zu ermitteln, welche unter dem Jahresdurchschnitt des Standortes der Heizungsanlage liegen. Damit sind die in Anspruch 1 genannten selbsttätigen Anpassungen der Heizkennlinie an die Heizungsanlage, an das Gebäude und an die Klimabedingungen beschrieben.

Im weiteren Verlauf des Zwischenzeitintervalles wird nach dem Zeitpunkt te die Raumlufttemperatur nach Gleichung (6.1) berechnet bis zum Zeitpunkt t0 + KR. Anschließend wird vorteilhafterweise im Hinblick auf kleine relative Meßfehler die Abtastperiode vergrößert, beispielsweise auf T2 = 4*T1, und die Raumlufttemperatur nach Gleichung (6.2) berechnet bis zum Zeitpunkt

$$tq = t0 - KR*\ln(q)$$

zu welchem der relative Unterschied zwischen Raumlufttemperatur und Rücklauftemperatur

$$q = (R(tq) + IH-I0 - I(tq))/R(tq)$$

oder mit Verwendung der Gleichung (6.2)

$$q = -(KR*dR(tq))/R(tq) > 0$$

eine Größe erreicht, die dem Meßfehler der Anlage entspricht. Nach dem Zeitpunkt tq ist nach Gleichung (6.3) die gemessene Rücklauftemperatur gleich dem Mittelwert der Raumlufttemperaturen aller Gebäuderäume, deren Wärmetauscher vom Wärmeträger des Heizkreises durchflossen werden. Wenn der Meßfehler mit q = 0,015 vorbestimmt wird, dann ist tq = t0 + (4,2)*KR.

Zur Berechnung der Wandtemperatur (M) im Zeitabschnitt t = t0...tq wird der Verlauf der Rücklauftemperatur nach dem Zeitpunkt tq mit der Abtastzeit n*KR gemessen und ihre Sekante linear auf den Zeitpunkt t0 extrapoliert. Daraus ergibt sich die Differenz IH-It. Weil in diesem Zeitbereich Rücklauftemperatur und Raumlufttemperatur gleich sind, wird die Steigung der Raumlufttemperatur zum Zeitpunkt tq nach Gleichung (6.4) und die extrapolierte Raumlufttemperatur It zum Zeitpunkt t0 nach Gleichung (6.5) berechnet. Die auf den Zeitpunkt t0 extrapolierte Differenz IH-It ist die Abnahme der Raumlufttemperatur während der Abkühlung der Rücklauftemperatur. Daraus resultiert mit guter Näherung die Wandtemperatur (M) zum Zeitpunkt t0 als Mittelwert zwischen der Raumlufttemperatur IH zur Zeit t0 und dem extrapolierten Wert der Raumlufttemperatur It zur Zeit t0 nach Gleichung (6.6). IH-It ist bei Gebäuden von mittelschwerer Bauweise 2...3 °C und nicht sehr verschieden vom kurzzeitigen Anstieg der Raumlufttemperatur TLE-TWE beim Beginn der Schnellaufheizung, wie weiter unten beschrieben wird.

Für jede Raumlufttemperatur I(j*T2) kann auch eine Zeitkonstante KG(j*T2) für die exponentielle Annäherung der Raumlufttemperatur an die Außentemperatur berechnet werden

$$KG(j*T2) = \frac{I((j+1)*T2) - (A((j+1)*T2) + A(j*T2))/2}{(I(j*T2) - I((j+1)*T2))/T2} \qquad (14)$$

t0 < = j*T2 < (2*tq-t0 oder tq + T3)

und zusammen, mit dem Zeitbereich und Temperaturbereich AF(b) nach Gleichung (12.3), für den sie berechnet wurde, gespeichert. Voraussetzung für die Berechnung von KG(j*T2) ist, daß die Raumlufttemperatur (I) fällt. Die Zeitkonstante KG(j*T2) kann beispielsweise dazu benutzt werden, den Verlauf der Raumlufttemperatur näherungsweise vorauszuberechnen mit dem Zweck, während des Zwischenzeitintervalles die Heizkreispumpe solange abzuschalten, bis die Raumlufttemperatur wieder genau bekannt sein muß.

Nach dem Zeitpunkt tq + T3 wird die Zeitkonstante KG(j*T3) nach Gleichung (6.8) berechnet und gespeichert. Mit Gleichung (6.9) wird die Steigung der Wandtemperatur (M), welche in diesem Zeitabschnitt auch die Steigung der Raumlufttemperatur und der Rücklauftemperatur ist, berechnet. Mit den gespeicherten Zeitkonstanten KG(j*T3) wird die Steigung dM gemäß Gleichung (6.9) und (6.3) für begrenzte Bereiche von I-A berechnet, um die Meßzeiten mit eingeschalteter Heizkreispumpe reduzieren zu können.

Ähnlich wie die Raumlufttemperatur wird nach den Verfahren auch die Wandtemperatur aus der Rücklauftemperatur berechnet. Während der Zeit t = t0...tq nimmt die Raumlufttemperatur wesentlich rascher ab als die Wandtemperatur (M). Wenn die Rücklauftemperatur nahezu gleich der Raumlufttemperatur ist, dann nehmen Raumlufttemperatur und Wandtemperatur (M) mit gleicher Geschwindigkeit ab. In diesem Zeitbereich ist die Raumlufttemperatur niedriger als die Wandtemperatur (M) und zwar etwa um den gleichen Betrag, um den die Raumlufttemperatur im ersten Zeitintervall höher ist als die Wandtemperatur (M).

Die lineare Näherung der zeitabhängigen Wandtemperatur (M) folgt damit der Gleichung (7.1) vom Zeitpunkt t0 bis zum Zeitpunkt tq und dann der Gleichung (7.2) vom Zeitpunkt tq bis zum Beginn der Schnellaufheizung zum Zeitpunkt tS ohne vorhergehende Stützung, oder vom Zeitpunkt tq bis zum Beginn der Stützung der Wandtemperatur (M) beim Zeitpunkt tSt, oder vom Zeitpunkt tq bis zum Beginn der Stützung der Raumlufttemperatur zum Zeitpunkt tStr. Die Raumlufttemperatur wird mit dem Sollwert (K) gestützt. Der Zeitpunkt des Beginns der Stützung tStr wird durch den Vergleich I<K der Raumlufttemperatur (I) nach den Gleichungen (6.1), (6.2), (6.3) mit dem Sollwert (K) bestimmt.

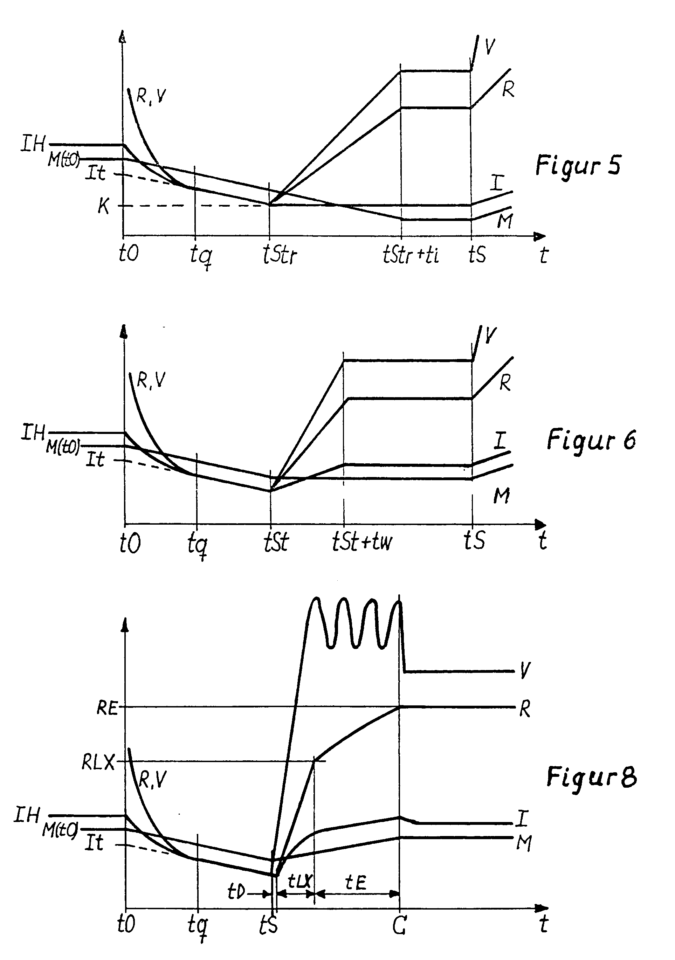

Nach der Erfindung wird dann der Zeitpunkt tStr gespeichert und mit einer Vorlauftemperatur geheizt, welche zunächst nur das Defizit der Wärmeabgabe der Gebäudemassen und anderer speichernder Massen ausgleicht. Dazu wird in den Gleichungen (1.1), (1.2) die Außentemperatur (A) durch eine Übergangstemperatur Tr nach Gleichung (7.7) ersetzt. Hierzu Figur 5.

Bei dieser Art zu stützen wird ein weiteres Absinken der Raumlufttemperatur verhindert, während die Wandtemperatur (M) gemäß Gleichung (7.3), (7.4) weiter abnimmt. Der Wert von dM(tStr) wird bis zum

Zeitpunkt tq + (tq-t0) mit Gleichung (7.5) berechnet und nach diesem Zeitpunkt aus der Steigung der Rücklauftemperatur nach Gleichung (7.6) berechnet, oder als früher errechneter Wert aus dem gleichen Zeit- und Temperaturbereich, oder als vom Gerätehersteller vorbestimmter Ersatzwert eingesetzt, wenn keine errechneten Werte verfügbar sind. Auch für IH-It kann zunächst der Ersatzwert eingesetzt werden. Der Sollwert für die Stütztemperatur geht nach der Zeit ti in den Sollwert (K) nach Gleichung (1.1) für den stationären Zustand mit dem Sollwert (K) über.

Bei tiefen Außentemperaturen (A) oder bei langen Auskühlzeiten kann es auch notwendig sein, die Stützung bei einer Raumlufttemperatur zu beginnen, die höher liegt als (K). Die Schnellaufheizung funktioniert nur bei Außentemperaturen, die so hoch sind, daß die vorbestimmte Raumlufttemperatur des ersten Zeitintervalles aufrecht erhalten werden kann, ohne die volle Leistung der Wärmequelle zu benötigen. Oder mit anderen Worten: der stationäre Wert der Vorlauftemperatur bei voller Leistungsabgabe des Wärmeerzeugers und ganz geöffnetem Stellglied muß höher sein als der Sollwert der Vorlauftemperatur, der notwendig ist, um die Raumlufttemperatur des ersten Zeitintervalles einzuhalten. Daraus resultiert die Bedingung, daß die Raumlufttemperatur umso weniger abgesenkt werden darf, je tiefer die Außentemperatur sinkt.

Bei längeren Absenkzeiten dürfen Raumlufttemperatur und Wandtemperatur (M) nur so weit absinken, daß die maximale Leistung des Wärmeerzeugers ausreicht, um bei annähernd gleichbleibender Außentemperatur die Behaglichkeitstemperatur entsprechend dem Sollwert (W) erzeugen zu können. Dies wäre beispielsweise nicht möglich, wenn bei der tiefsten Außentemperatur, bei welcher der Wärmeerzeuger mit voller Leistungsabgabe den Sollwert (W) der Raumlufttemperatur noch aufrecht erhält, über längere Zeit abgesenkt wird. Da die Wandtemperatur (M) absinkt, müßte bei der Schnellaufheizung nun eine Raumlufttemperatur erzeugt werden, die höher ist als (W), und dazu ist der Wärmeerzeuger nach der Voraussetzung nicht in der Lage. Die Behaglichkeitstemperatur wird also nicht erreicht, solange die Außentemperatur auf ihrem niedrigen Wert verharrt.

Mit den Verfahren wird im folgenden mit Hilfe der Wandtemperatur während des Zwischenzeitintervalles laufend berechnet, welche Vorlauftemperatur Vo bei voller Leistung des Wärmeerzeugers verfügbar sein muß, um den stationären Wert IB der Behaglichkeitstemperatur durch die Schnellaufheizung zu erreichen. Hierzu Figur 7.

Die Behaglichkeitstemperatur im Zeitpunkt t0 ist IB0 = (IH + M(t0))/2 oder mit Gleichung (6.6) ist IB0 = IH - (IH-It)/4. Für den Sollwert des nächstfolgenden ersten Zeitintervalles ist die Behaglichkeitstemperatur nicht auf IH, sondern auf den dann gültigen Sollwert (W) zu beziehen. Folglich ist die Behaglichkeitstemperatur nach Gleichung (8.1) am Ende des Zwischenzeitintervalles zu erreichen. Damit ist die zu erreichende Raumlufttemperatur Io so hoch, daß ihr Mittelwert mit der Wandtemperatur (M) gleich dem Sollwert der Behaglichkeitstemperatur IB ist. Die Symmetrie zu IB wird erreicht durch die Bedingung Io - IB = IB - M(t) oder umgeformt ist Io nach Gleichung (8.2) bestimmt.

Die Vorlauftemperatur Vo, welche für die Schnellaufheizung erforderlich ist, wird fortwährend nach den Gleichungen (8.3), (8.4) vorzugsweise mit den Parametern sH, BH, FH berechnet, unter Berücksichtigung der Gleichungen (7.1)...(7.6) für die Wandtemperatur (M), sowie (8.1), (8.2) für die Behaglichkeitstemperatur. Wenn die bei tiefen Außentemperaturen gewonnenen Werte von sH, BH, FH noch nicht ermittelt sind, wird s0, B0, F0 eingesetzt. Der Sollwert der Raumlufttemperatur des nächstfolgenden ersten Zeitintervalles braucht nicht identisch zu sein mit dem Sollwert der Raumlufttemperatur des zuletzt vorangegangenen ersten Zeitintervalles.

Verglichen wird Vo mit der verfügbaren maximalen Vorlauftemperatur VX nach Gleichung (15). Wenn Vo = VX erfüllt wird, dann gilt Io = Io(tSt). Dieser Wert wird zusammen mit dem Zeitpunkt für den Beginn der Stützung tSt, der Wandtemperatur M(tSt) und der Außentemperatur A(tSt) gespeichert. Hierzu Figur 6.

Sobald der Vergleich Vo = VX erfüllt wird, darf die Raumlufttemperatur Io, welche durch die Schnellaufheizung erreicht werden soll, nicht mehr weiter ansteigen und die während des aktuellen Zwischenintervalles sinkende Wandtemperatur (M) darf nicht mehr weiter absinken. Gestützt wird nun die Wandtemperatur M(t) nach Gleichung (7.1)...(7.6) auf dem Wert M(tSt). Damit wird der Sollwert für die Raumlufttemperatur (ISt) während der Stützung nach Gleichung (8.5) berechnet, wobei M(tSt) = M(t) mit t = tSt darstellt. Der Sollwert der Vorlauftemperatur während der Stützung der Wandtemperatur (M) folgt den Gleichungen (1.1), (1.2).

Die Wandtemperatur M(t) wird begrenzt durch Vo oder durch die Raumlufttemperatur K-(IH-It)/2. Der tiefste vorbestimmte Wert von (K) ist die Frostschutztemperatur Kmin. Sobald die Außentemperatur unter den Wert A(tSt) sinkt, wird die Abweichung

$$dIo = Io(tSt) - Io$$

berechnet und damit der nachgeführte, berichtigte Sollwert IStb nach Gleichung (8.6) in die Gleichungen (1.1), (1.2) zur Berechnung des Sollwertes der Vorlauftemperatur eingesetzt. Dabei wird die Gleichheit von Vo = VX gegebenenfalls durch iterative Rechnung mit schrittweiser Änderung von Io erreicht.

Wenn jedoch die Außentemperatur während der Stützung der Wandtemperatur ansteigt, dann wird gemäß der Heizkennlinie mit niedrigerer Vorlauftemperatur gestützt und das Stützen ganz eingestellt, sobald die Außentemperatur den Sollwert ISt oder IStb übersteigt. Die Energiezufuhr zum Heizkreis wird dann abgeschaltet. Erst wenn die Außentemperatur den zuletzt berechneten Sollwert ISt oder IStb um beispielsweise 3°C unterschreitet, wird wieder gestützt. Um die Raumlufttemperatur in der beschriebenen Weise mittels der Rücklauftemperatur zu messen, wird die Heizkreispumpe intermittierend eingeschaltet.

Für Zeiten tSt-t0 <= KR ist die Wandauskühlung bei fast allen Gebäuden vernachlässigbar klein. Dadurch wird die Messung der Parameter s0, B0, F0 auch bei tiefen Außentemperaturen A > AH möglich. Die Abnahme der Raumlufttemperatur hängt in diesem Fall nur von der Temperatur des Wärmeträgers ab und ist damit durch die Anhebung der Temperatur des Wärmeträgers auf ihren stationären Wert wieder rückgängig zu machen.

Bei der Schnellaufheizung wird der Wärmeerzeuger mit maximaler Leistung betrieben und das Stellglied ganz geöffnet, sodaß sich nach einiger Zeit die maximale Vorlauftemperatur einstellt. Beim Beginn der Schnellaufheizung werden Vorlauftemperatur (V) und Rücklauftemperatur (R) im wesentlichen durch das Leistungsvermögen des Wärmeerzeugers und die Durchflußmenge des Wärmeträgers pro Zeiteinheit bestimmt. Die Rücklauftemperatur steigt dabei nahezu linear an, bis sie ihren Sollwert für das Ende der Schnellaufheizung oder ihren Maximalwert RX erreicht, oder ihre Anstiegsgeschwindigkeit nachhaltig reduziert. Der Zeitabschnitt, in dem der Wärmeerzeuger nahezu allein den Anstieg der Rücklauftemperatur bestimmt, wird mit tL bezeichnet. Hierzu Figur 8.

Anschließend an den Zeitabschnitt tL bestimmt die Heizlast die Anstiegsgeschwindigkeit der Rücklauftemperatur. Dieser Zeitabschnitt wird mit tE bezeichnet. Die Grenze zwischen tL und tE tritt näherungsweise dann auf, wenn die Raumlufttemperatur um den Betrag (IH-It)/2 höher ist als die Wandtemperatur (M). Während des Zeitabschnittes tE bestimmt die Wandtemperatur M(t) wesentlich den Anstieg der Raumlufttemperatur und damit auch der Rücklauftemperatur (R).

Beim Beginn der Schnellaufheizung ist die Wandtemperatur (M) durch Messung der Rücklauftemperatur, oder bei Vorhandensein eines Fühlers für die Raumlufttemperatur durch Messung der Raumlufttemperatur, näherungsweise bekannt. Bei Anwendung der Schnellaufheizkennlinie wird die Abschaltbedingung für die Schnellaufheizung bei hinreichend langen Zwischenzeitintervallen im wesentlichen durch die Anhebung der Rücklauftemperatur (R) auf ihren Wert des ersten Zeitintervalles bestimmt. Die Erwärmung der Wandtemperatur (M) hängt mehr von der Raumlufttemperatur als von der Außentemperatur ab. Wenn die Schnellaufheizung nicht tagelang andauert, beeinflußt die Außentemperatur die Wandtemperatur (M) hauptsächlich über ihren Einfluß auf die Raumlufttemperatur. Nach den Verfahren wird deshalb die Wandtemperatur (M) auf ihren stationären Wert gebracht, nachdem die Vorlauftemperatur auf den Sollwert nach Gleichung (1.1), (1.2) mit dem Parameter I = Io umgeschaltet wird.

Der Einschaltzeitpunkt der Schnellaufheizung wird laufend berechnet, indem die Zeiten tL, tE und tD zur Echtzeit addiert werden und die Summe mit dem vorbestimmten Zeitpunkt (C) gemäß Gleichung (8.7) verglichen wird. Bei Gleichheit wird die Schnellaufheizung gestartet. Die Zeit tD verstreicht vom Öffnen des Stellgliedes bis zum ersten Anstieg der Rücklauftemperatur. Beim Zeitpunkt (C) beginnt das erste Zeitintervall. Die Berechnung der Zeiten tD, tL, tE wird zunächst mit Ersatzwerten für tD, dRL, KS vorgenommen. Im Verlaufe von Schnellaufheizungen hinreichender Dauer werden die Parameter für die Berechnung dieser Zeiten bestimmt. Dadurch wird die SCHNELLAUFHEIZKENNLINIE an die Heizungsanlage, an das Gebäude und an die Klimabedingungen fortwährend angepaßt.

Während des Zwischenzeitintervalles wird die Rücklauftemperatur (R) gemessen, und daraus die Raumlufttemperatur Iu mit guter Näherung berechnet, welche zum Zeitpunkt des Beginns der Schnellaufheizung auftritt. Weiterhin kann berechnet werden, um welchen Betrag IL die Raumlufttemperatur während der Schnellaufheizung ansteigt, ohne die Wandtemperatur (M) merklich anheben zu müssen. Die Temperaturen Iu und IL sind für die verschiedenen Zeitabschnitte vom Beginn des Zwischenzeitintervalles bis zum Beginn der Schnellaufheizung in Tabelle (8.9) dargestellt.

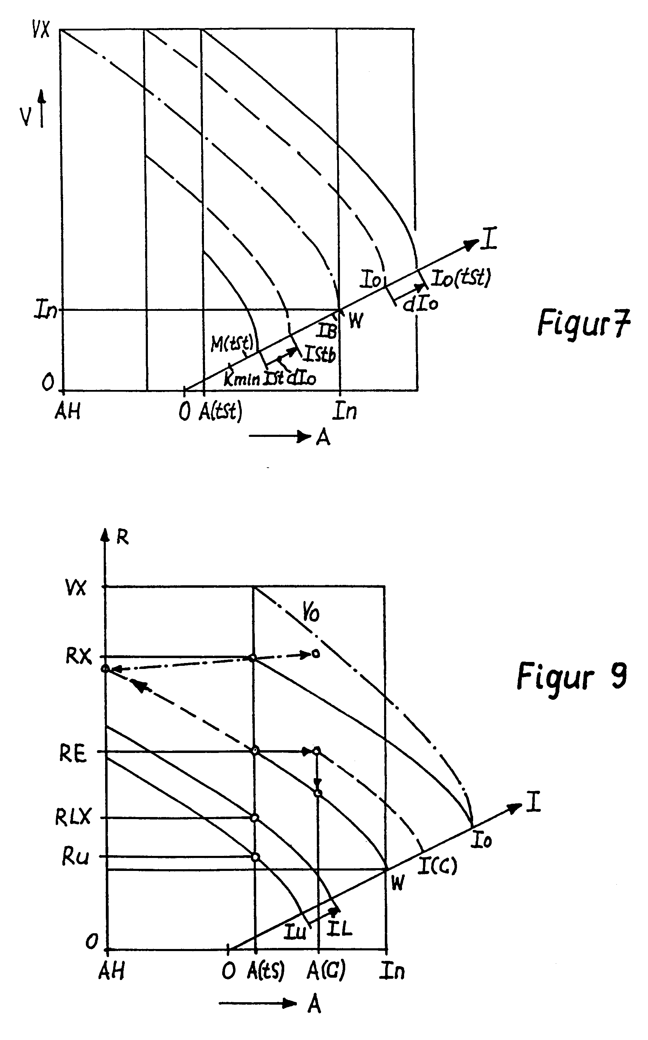

Die Rücklauftemperatur RL erreicht am Ende des Zeitabschnittes tL den Wert RLX nach Gleichung (9.1), (9.2), vorausgesetzt, daß sie nicht schon vorher den Wert RE nach Gleichung (9.5) für das Ende der Schnellaufheizung oder die maximale Rücklauftemperatur RX nach Gleichung (8.8) erreicht hat. Hierzu Figur 9.

Die berechnete Zeit für den linearen Anstieg bis zum Wert der Rücklauftemperatur RL, welche den kleinsten der drei möglichen Werte nach den Gleichungen (8.8), (9.1), (9.2), (9.5), (9.6) darstellt, ergibt sich aus Gleichung (9.3). Wenn während des Zwischenzeitintervalles die Wandtemperatur (M) merklich abgesun-

10

ken ist, dann muß während der Schnellaufheizung die Rücklauftemperatur über den Wert RL hinaus ansteigen, um die Wandtemperatur (M) gegen ihren stationären Wert des ersten Zeitintervalles anzuheben. Der Anstieg der Rücklauftemperatur wird in diesem Zeitbereich vom Anstieg der Wandtemperatur (M) bestimmt und verläuft deshalb im allgemeinem langsamer als während der Zeit tL.

Die Rücklauftemperatur RE wird mit den Gleichungen (9.5), (9.6) berechnet. Die berechnete Zeit tE für den dritten Abschnitt der Schnellaufheizkennlinie wird mit Gleichung (9.7) ermittelt. Die Abschaltung der Schnellaufheizung wird bei Erreichen von RE vorgenommen, auch wenn der Zeitpunkt (C) überschritten wird. Dieser Fall tritt besonders dann ein, wenn während der Schnellaufheizung die Außentemperatur wesentlich niedriger wird. Durch den Zeitvergleich $t + tD + tL + tE >= C$ wird die Schnellaufheizung eingeschaltet. Die Abschaltung der Schnellaufheizung wird vorgenommen, wenn die Rücklauftemperatur den Wert nach Gleichung (9.5) überschreitet:

$R >= RE.$

Die maximale Vorlauftemperatur VX wird während der Schnellaufheizung ermittelt. Vorausgesetzt, daß die vorausberechnete Zeit $tL + tE$ für die Schnellaufheizung eine Mindestzeit überschreitet, wird vom Zeitpunkt tS ab ein Mittelwert von (Vist) berechnet. Dabei wird zum Beispiel mit der Abtastzeit von 1 Minute die Vorlauftemperatur gemessen und der Mittelwert mit steigender Summandenzahl berechnet bis die Mindestzeit für die Schnellaufheizung erreicht ist. Dann bleibt die Summandenzahl p konstant. Sobald der gleitende Mittelwert den im Maximalwertspeicher 16 befindlichen Wert von VX überschreitet, wird er in den Maximalwertspeicher eingeschrieben und steht dort bis ein höherer Wert berechnet wird:

$$VX = (Vist1 + Vist2 + ... + Vistp)/p \qquad (15)$$

Als Anfangswert für VX steht sein Ersatzwert im Maximalwertspeicher.

Der Zeitpunkt $tS + tD$ kann dadurch ermittelt werden, daß aus Abtastwerten der Rücklauftemperatur Differenzenquotienten gemäß Gleichung (9.4) gebildet werden mit $I = 0, 1, 2,...$ und mit $I*T4 = t-tS$. Sobald der Differenzenquotient dRL(I) eine positive Schwelle überschreitet, wird der Zeitpunkt $tS + I*T4$ gespeichert und daraus Gleichung (16) berechnet.

$$tD = I*T4 \qquad (16)$$

Die Rücklauftemperatur RE nach Gleichung (9.5), (9.6) ist der berechnete Wert für die Abschaltbedingung der Schnellaufheizung. Der Wert RE, welcher mit der Außentemperatur A(tS) berechnet wird, wird während der Schnellaufheizung beibehalten, auch wenn die Außentemperatur ansteigt, weil die Wandtemperatur (M) durch den Einfluß der Außentemperatur wesentlich langsamer ansteigt als durch den Einfluß der Raumlufttemperatur. Sinkt die Außentemperatur während der Schnellaufheizung jedoch ab, dann wird auch RE gemäß Gleichung (9.5), (9.6) erhöht, weil in diesem Fall auch der stationäre Wert der Rücklauftemperatur während des nächstfolgenden ersten Zeitintervalles ansteigt. Die berechnete Zeitdauer tE ergibt sich aus Gleichung (9.7) unter der Voraussetzung, daß die Rücklauftemperatur in diesem Zeitabschnitt durch eine Exponentialfunktion angenähert wird.

Für die Zeitkonstante KS wird zunächst der Ersatzwert eingesetzt. Sobald eine hinreichend lange Schnellaufheizung stattfindet, wird der zwischen Ru und RX liegende Wert Rm der Rücklauftemperatur gemessen und der Zeitpunkt tm dieser Messung gespeichert und damit KS nach Gleichung (9.8) berechnet.

Die meßtechnische Bestimmung der Steigung dRL der Rücklauftemperatur wird nach Gleichung (9.9) durchgeführt. Sie hat den Vorteil, daß die mittlere Steigung für den ganzen Zeitabschnitt tL ermittelt wird und kann insbesondere dann angewandt werden, wenn der Wärmeinhalt des Wärmeerzeugers zum Zeitpunkt tS definiert werden kann, beispielsweise dadurch, daß vor dem Beginn der Schnellaufheizung ohne vorhergehende Stützung vor dem Zeitpunkt tS der Speicherinhalt des Wärmeerzeugers auf die maximale Temperatur erwärmt wird. Bei kleinen Speicherinhalten des Wärmeerzeugers ist der definierte Zustand leichter dadurch einzuhalten, daß der Speicherinhalt sich auf niedriger Temperatur befindet. Diese Messung liefert Meßwerte von RLX und der dazugehörigen maximalen Dauer des linearen Anstieges tLX, woraus gemäß Gleichung (9.9) Gleichung (17) berechnet wird.

$$dRL = (RLX-Ru)/tLX \qquad (17)$$

Mit den durch Messung gewonnenen Werten tD, Ru, RLX, tLX, dRL, tm, Rm, RX, KS wird die Schnellaufheizkennlinie an die Heizungsanlage, das Gebäude und die Klimabedingungen angepaßt. Auch hier gilt, wie bei den Parametern für die Heizkennlinie, daß die unter den günstigsten Voraussetzungen für die Genauigkeit gewonnenen Parameter benutzt werden, bis sich die Eigenschaften der Heizungsanlage, des Gebäudes oder der Klimabedingungen wesentlich ändern. Ein Beispiel für günstige Voraussetzungen der Parametergewinnung ist eine hinreichend lange Absenkung bei der durchschnittlichen Außentemperatur der Heizperiode.

Die alternative Steuerung der Schnellaufheizung mit Hilfe der gemessenen Raumlufttemperatur wird im Patent DE 2813 081 ausführlich behandelt. Sie soll hier insoweit beschrieben werden, wie es die selbsttätige Gewinnung und Einfügung der Parameter TLE, TWE, p1, p2 für die EINSCHALTTEMPERATUR-KENNLINIE der Schnellaufheizung erfordert. In Anspruch 2 wird mit den Gleichungen (10.1), (10.2) die Einschalttemperatur-Kennlinie aus der Patentschrift DE 2813 081, jedoch mit eingesetzten Abkürzungen, wiederholt.

Die maximale Raumlufttemperatur TLE kann empirisch gefunden werden, wenn bei geöffnetem Stellglied hinreichend lange Zeit mit der maximalen Heizleistung geheizt und TLE gemessen wird. Sie kann aber auch rechnerisch bestimmt werden, indem die Vorlauftemperatur Vo nach Gleichung (8.3) mit schrittweise geänderter Raumlufttemperatur Io berechnet wird, bis Vo gleich oder annähernd gleich der maximalen Vorlauftemperatur VX nach Gleichung (15) oder deren Ersatzwert ist. Der Wert von Io, welcher die maximale Vorlauftemperatur VX ergibt, ist gleich der maximalen Raumlufttemperatur TLE.

Wenn in der Anlage kein Fühler für die Wandtemperatur TWE vorgesehen ist, wird TWE aus der Messung der Raumlufttemperatur mit guter Näherung gewonnen. Die Raumlufttemperatur weist am Beginn der Schnellaufheizung einen kurzfristigen Anstieg auf, dessen Amplitude der Differenz TLE-TWE entspricht. Deshalb wird beispielsweise die Raumlufttemperatur mit der Abtastperiode T5 gemessen und zusammen mit den Differenzenquotienten nach Gleichung (10.3) und den Abtastzeitpunkten $t = tS + j^*T5$ gespeichert. Daraus wird nach Gleichung (10.4) der Parameter p2 berechnet, wobei das in Anspruch 2 beschriebene Verhältnis z ein Maß für das Abklingen des kurzfristigen Einschwingvorganges der Raumlufttemperatur ist. Mit der Raumlufttemperatur TL(tS) zum Zeitpunkt tS und der Raumlufttemperatur TL(tz) zum Zeitpunkt tz wird nach Gleichung (10.5) die Differenz TLE-TWE berechnet.

Der langfristige Einschwingvorgang der Raumlufttemperatur wird näherungsweise durch den Anstieg der Wandtemperatur (M) bestimmt und durch eine Exponentialfunktion mit dem Parameter p1 im Exponenten beschrieben. Zur Bestimmung von p1 wird die Raumlufttemperatur nach dem Zeitpunkt tz mit der Abtastperiode T6 abgetastet und nach Gleichung (10.6) der Parameter p1 berechnet. Bei hinreichend lang dauernden Schnellaufheizungen kann die Genauigkeit für die Bestimmung des Parameters p1 gesteigert werden, wenn analog zur Gleichung (9.8) der Parameter p1 nach Gleichung (10.7) berechnet wird. Die Raumlufttemperatur $TL(tz + 4^*T5)$ zum Zeitpunkt $tz + 4^*T5$ stellt den Anfangspunkt des langfristigen Einschwingvorganges dar. Die Raumlufttemperatur TLm befindet sich etwa in der Mitte zwischen $TL(tz + 4^*T5)$ und der maximalen Raumlufttemperatur TLE.

Damit sind die beiden Gleichungen der Patentschrift DE 2813 081 für die Einschalttemperatur-Kennlinie der Schnellaufheizung abhängig von der gemessenen Raumlufttemperatur Te vollständig bestimmt. Durch die Anlage kann damit der Zeitbedarf für die Schnellaufheizung, sowie die Stütztemperatur, die höher als K liegt, berechnet werden. Die selbsttätige Anpassung und Einfügung der Parameter der Einschalttemperatur-Kennlinie an die Heizungsanlage und an das Gebäude ist damit gelöst und beschrieben.

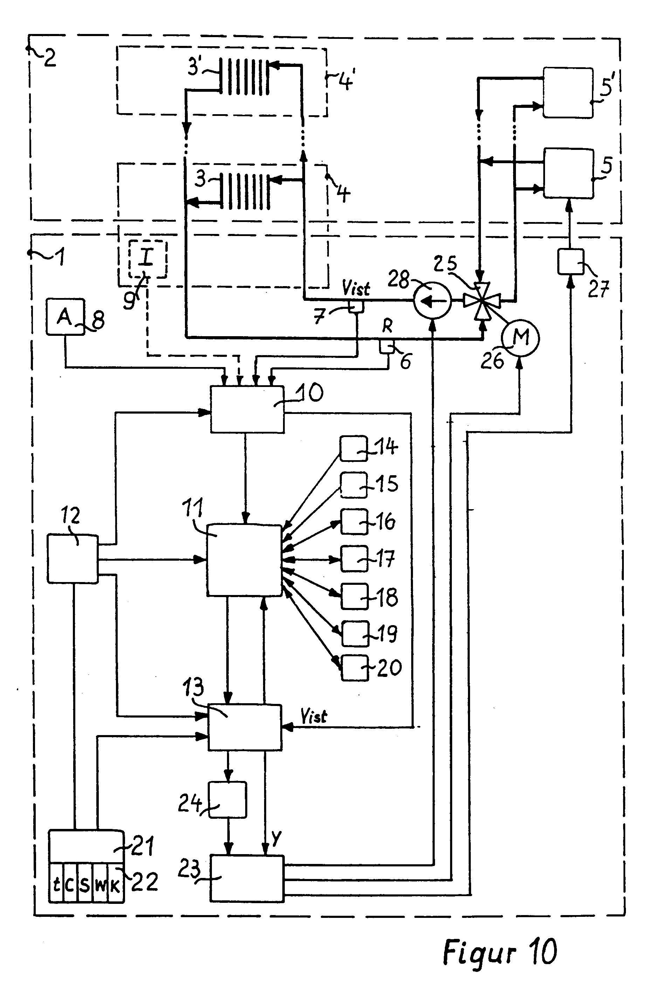

In Figur 10 wird die Anlage zur Durchführung der Verfahren, kurz Anlage 1 genannt, und die Heizungsanlage 2 in schematischer Darstellung gezeigt. Die Heizungsanlage 2 besteht aus mindestens einem Wärmetauscher 3, 3' und mindestens einem Gebäuderaum 4, 4', mindestens einem Wärmeerzeuger 5, welcher von der Anlage gesteuert wird, oder 5', welcher von der Anlage nicht gesteuert werden muß, oder auch aus der Kombination von beiden Arten. Der gezeichnete Raum 4 dient als Testraum zur Messung der Raumlufttemperatur.

Der Heizkreis besteht aus den Wärmetauschern 3, 3', in den Gebäuderäumen 4, 4', wobei in einem Gebäuderaum gleichartige oder verschiedenartige Wärmetauscher wie Radiatoren, Konvektoren, Plattenheizkörper oder andere sein können, oder der ganze Heizkreis als Fußbodenheizung ausgestaltet sein kann. Im Heizkreis befindet sich die Heizkreispumpe 28, welche den Wärmeträger durch den Heizkreis bewegt, und entweder das Stellglied 25 oder der Wärmeerzeuger 5'. Die Verrohrung des Heizkreises ist so beschaffen, daß insbesondere bei seiner hydraulischen Trennung vom Wärmeerzeuger während des Zwischenzeitintervalles an seinem Eingang die gleiche Menge des Wärmeträgers fließt wie an seinem Ausgang. Wenn Thermostatventile an den Wärmetauschern den Gesamtdurchfluß des Wärmeträgers im Heizkreis wesentlich reduzieren oder ihn ganz sperren, dann nimmt die Differenz zwischen Vorlauf- und Rücklauftemperatur über das beim stationären Heizen übliche Maß zu. Bei mäßiger Zunahme wird nach den Verfahren auf die Anpassung der Parameter für die Heizkennlinie verzichtet, bei sehr starker Zunahme wird die Energiezufuhr zum Heizkreis abgeschaltet.

Der Wärmeerzeuger kann mit Öl oder Gas, eventuell mit Feststoffen oder elektrisch beheizt werden oder die Übergabestation einer Fernheizung sein. Der Wärmeerzeuger kann nach Art eines Heizkessels mit einem Wärmeträgervorrat versehen sein. Dann ist ein Stellglied mit Regelkennlinie, wie es beispielsweise der gezeichnete Vierwegemischer darstellt, vorteilhaft. Wenn der Wärmeträgervorrat nach Art von Gasthermen klein ist, kann zur Regelung der Temperatur des Wärmeträgers der Brenner dienen und das Stellglied ist entbehrlich. Bei Verwendung eines Stellgliedes kann es zur Reduzierung der Stillstandsverluste vorteilhaft sein, auch die Betriebsbereitschaft des Wärmeerzeugers von der Anlage aus zu steuern.

Das Stellglied kann ein Vierwegemischer oder ein Dreiwegemischer oder ein Regelventil oder eine Kombination von Absperrventilen und Regelventilen sein. Das Stellglied ist so beschaffen, daß der Heizkreis vom Wärmeerzeuger hydraulisch getrennt werden kann und gleichzeitig der Wärmeträger den Heizkreis mit ungefähr der gleichen Menge durchströmt wie während der Energiezufuhr zum Heizkreis.

Die Anlage 1 besteht aus einem Fühler 6 für die Rücklauftemperatur (R) am Ausgang des Heizkreises, aus einem Fühler 7 für die Vorlauftemperatur (Vist) am Eingang des Heizkreises, einem Fühler 8 für die das Gebäude umgebende Außentemperatur (A), und mindestens ein Fühler 9 für die Raumlufttemperatur (I), welcher sich unter den genannten Voraussetzungen in mindestens einem Gebäuderaum 4, dem sogenannten Testraum, befindet.

Weiter besteht die Anlage 1 aus einer Abtasteinrichtung 10 für die Aufnahme, Verarbeitung und Weitergabe der von den Fühlern 6...9 gebildeten elektrischen Signale, einem elektronischen Speicher 11 zur Aufnahme der Signale aus der Abtasteinrichtung 10 und des Taktgebers 12, und zur Weitergabe der gespeicherten Informationen an den digital arbeitenden Rechner 13, und zum Empfang von Informationen aus dem Rechner, sowie zum Speichern des Ablaufprogrammes aus dem Festwertspeicher 14, der Ersatzwerte aus dem Festwertspeicher 15, und zum Datenaustausch mit den Speicherbereichen 16 für die Maximalwerte, 17 für die Mittelwerte, 18 für die Filterbedingungen, 19 für die Parameter der Heizkennlinie, 20 für die Parameter der Schnellaufheizkennlinie oder der Einschalttemperatur-Kennlinie.

Der Rechner erhält außerdem vom Abtastgerät die Daten für den Augenblickswert der Vorlauftemperatur (Vist), Signale des Zeitgebers 12 und der Schaltuhr 21, sowie aus dem Eingabeteil 22 die vorbestimmten Werte für die Echtzeit (t), für den Beginn (C) und das Ende (S) des ersten Zeitintervalles, für den Sollwert (W) und den Sollwert (K). Wenn während des ersten Zeitintervalles mehr als eine Sollwerttemperatur eingestellt werden soll, dann ist unter dem Sollwert (W) derjenige zu verstehen, welcher die Anpassung der Heizkennlinie ermöglicht.

Im Rechner werden die Größen der Heizkennlinie nach Gleichung (1.1), (1.2) miteinander verknüpft, zusammen mit der gemessenen Vorlauftemperatur (Vist) wird die Stellgröße (y) berechnet und dem Reglerausgang 23 zugeführt. Damit wird entweder das Stellglied 25 über den Stellantrieb 26 gesteuert, wenn der Wärmeerzeuger vom Heizkreis getrennt werden kann, oder die Energiezufuhr zum Wärmeerzeuger, beispielsweise über eine Brennersteuerung 27, wenn der Wärmeerzeuger Bestandteil des Heizkreises ist. Der Rechner verknüpft auch die Signale der Schaltuhr 21, des Zeitgebers 12, der Eingabeeinrichtung 22 und der Fühler 6...9 zu Schaltbedingungen 24, welche über den Stellantrieb 26 auf das Stellglied 25, oder auf die Steuerung 27 der Energiezufuhr zum Wärmeerzeuger, oder auf die Heizkreispumpe 28 zur Bewegung des Wärmeträgers einzeln oder in Kombination einwirken.

Die Abtasteinrichtung 10 dient zur periodischen und zyklischen Abfrage der gefühlten Temperaturen und zur Umwandlung der daraus gebildeten elektrischen Signale in digitale Zahlenwerte. Ihre kleinste Abtastperiode beträgt beispielsweise zehn Sekunden. Die anderen Abtastperioden T1...T6 betragen je ein Vielfaches der kleinsten Abtastperiode. Alle Abtastperioden werden im Zeitgeber generiert und selektiv an die Abtasteinrichtung 10, den Speicher 11 und an den Rechner 13 weitergegeben.

Der Speicher 11 besitzt gesonderte Bereiche zur Speicherung. Der Speicherbereich 14 enthält das Ablaufprogramm zur Regelung der Vorlauftemperatur, zur Steuerung der Raumlufttemperatur nach vorbestimmten oder berechneten Sollwerten, zur Steuerung der Schnellaufheizung, zur Parameterberechnung für die Heizkennlinie und die Kennlinie für die Schnellaufheizung, sowie für alle Messungen, Steuervorgänge, Rechenoperationen und logischen Operationen. Die Speicherbereiche nehmen beispielsweise und ohne Anspruch auf Vollständigkeit die folgenden Werte auf: 15 die am Schluß der Beschreibung aufgeführten Ersatzwerte; 16 die Maximal- und Grenzwerte AH, VX, mH, q, z; 17 die Mittelwerte von A0, B0, R0, V0, F0, s0, (1-1/B0)/F0, Vist; 18 die Filterbedingungen Vist-V, (Rmax-Rmin)/Rmittel, (Amax-Amin)/Amittel; 19 die Parameter für die Heizkennlinie B0, F0, s0, BH, FH, (1-1/BH)/FH, sH, mH, ln-AH, 20 die Parameter der Schnellaufheizkennlinie dRL, KS, IH-It, RX, oder der Einschalttemperatur-Kennlinie p1, p2, TLE, TWE, usw.

Durch die Auswertung der Temperaturen (A), (R), (Vist) und bei Vorhandensein eines geeigneten Testraumes zusätzlich (I), werden die Parameter für die anzuwendenden Kennlinien und Betriebsarten ermittelt. Da die Baugruppen für die Ermittlung dieser Parameter die gleichen sind wie für die Regelung der Vorlauftemperatur und die Steuerung der Raumlufttemperatur, ist der Aufwand an Bauelementen für die selbsttätige Anpassung dieser Kennlinien an die Heizungsanlage, an das Gebäude und an die auf das Gebäude einwirkenden Klimabedingungen im wesentlichen auf die höhere Speicherkapazität beschränkt.

WORTABKÜRZUNGEN:

| Anlage = | Anlage zur Durchführung der erfindungsgemäßen Verfahren |
|---|---|
| Verfahren = | erfindungsgemäße Verfahren |
| Außentemperatur = | Außenlufttemperatur |
| Rücklauftemperatur = | Heizungsrücklauftemperatur am Ausgang des Heizkreises |
| Vorlauftemperatur = | Heizungsvorlauftemperatur am Eingang des Heizkreises |
| Wandtemperatur (M) = | siehe Definition unter M in der Symbolliste |

SYMBOLE:

Hierzu auch die Hinweise in Anspruch 1 vor der Gleichung (1.1) und nach Gleichung (2.1), in Anspruch 2 vor Gleichung (7.1), in der Beschreibung nach Gleichung (11).

| $a$ | Konstante |
|---|---|
| $A$ | Außenlufttemperatur allgemein, Augenblickswert |
| $A0$ | Außenlufttemperatur für Parameterberechnung |
| $AF(b)$ | Außenlufttemperaturbereich |
| $AF(b+c)$ | Außenlufttemperaturbereich, der bei höheren Temperaturen als $AF(b)$ liegt |
| $AH$ | tiefste Außenlufttemperatur für die Klimazone |
| $A((j+1)^*T2)$ | Außenlufttemperatur zum Zeitpunkt $t0+(j+1)^*T2$ |
| $An$ | Nennwert der Außentemperatur |
| $B0$ | angepaßter Wert der Basis der Potenz mit Doppelexponenten |
| $Bn$ | Nennwert der Basis der Potenz mit Doppelexponenten, Konstante |
| $BH$ | Mittelwert von $B0$ |
| $c$ | Hilfsvariable |
| $C$ | Zeitpunkt für den Beginn des ersten Zeitintervalles |
| $dFH$ | Differenz von FH |
| $dIo$ | Änderung von Io bei abnehmender Außentemperatur |
| $dI(ta)$ | Steigung der Raumlufttemperatur zum Zeitpunkt $ta$ |
| $dM(tq)$ | Steigung der Wandtemperatur M zum Zeitpunkt $tq$ |
| $dR(ta)$ | Steigung der Rücklauftemperatur zum Zeitpunkt $ta$ |
| $dR(te)$ | Steigung der Rücklauftemperatur zum Zeitpunkt $te$ |
| $dR(j^*T1)$ | Differenzenquotient als Näherung der Steigung der Rücklauftemperatur zum Zeitpunkt $t0+j^*T1$ |
| $dRL(k)$ | Differenzenquotient als Näherung der Steigung der Rücklauftemperatur zum Zeitpunkt $tS+tD+k^*T4$ |
| $dRL$ | Mittelwert der Steigung der Rücklauftemperatur während der Schnellaufheizung |
| $dTL$ | Steigung der Raumlufttemperatur während der Schnellaufheizung (Patent DE 2813 081) |
| $dTLX$ | maximale Steigung der Raumlufttemperatur während der Schnellaufheizung (Patent DE 2813 081) |
| $e$ | Konstante |
| $f$ | Hilfsvariable zur Berechnung von z |
| $F0$ | Parameter der Heizkennlinie |
| $FH$ | Mittelwert von $F0$ |
| $F0' = dF0/dm$ | Ableitung von F0 nach mi oder mH |
| $F0'(b+c)$ | Ableitung von F0 nach mi oder mH im Bereich $AF(b+c)$ |
| $FH(b)$ | Mittelwert von F0 innerhalb des Bereiches $AF(b)$ |
| $FH(b+c)$ | Mittelwert von F0 im Bereich von $AF(b+c)$ |
| $Fi$ | Ersatzwert für FH |
| $h$ | Hilfsvariable zur Berechnung von z |
| $I$ | Raumlufttemperatur allgemein, Augenblickswert |
| $I0$ | Raumlufttemperatur für Parameterberechnung |
| $I(ta)$ | Raumlufttemperatur zum Zeitpunkt $ta$ |
| $I(te)$ | Raumlufttemperatur zum Zeitpunkt $te$ |

14

| | |
|---|---|
| I(j*T1) | Raumlufttemperatur zum Zeitpunkt t0 + j*T1 |
| I((j + 1)*T1) | Raumlufttemperatur eine Abtastperiode später als t0 + j*T1 |
| In | Nennwert der Raumlufttemperatur |
| Io | Raumlufttemperatur, Parameter für Schnellaufheizung, Parameter für Stützung der Wandtemperatur |
| It | Raumlufttemperatur, extrapolierter Wert zur Berechnung von M(t0) |
| Iu | Raumlufttemperatur beim Beginn der Schnellaufheizung |
| IB | Behaglichkeitstemperatur IB = (I + M)/2 |
| IH | Raumlufttemperatur mit Berücksichtigung der Heizlast |
| IL | Zuwachs der Raumlufttemperatur während des Zeitabschnittes tL |
| ISt | Sollwert der Raumlufttemperatur zur Stützung der Wandtemperatur M |
| IStb | Sollwert der Raumlufttemperatur, berichtigter Wert von ISt bei sinkender Außentemperatur |
| j | Zählvariable bei der Abtastung |
| k | Zählvariable bei der Abtastung |
| K | Sollwert der Raumlufttemperatur zur Stützung der Raumlufttemperatur |
| Kmin | Minimalwert von K, Frostschutztemperatur |
| KG | Ersatzwert von KG(j*T2) |
| KG(j*T2) | Zeitkonstante für das Gebäude zum Zeitpunkt t0 + j*T2 |
| KR | Zeitkonstante für die Rücklauftemperatur während des Zwischenzeitintervalles |
| KS | Zeitkonstante für die Rücklauftemperatur während der Schnellaufheizung im Zeitbereich tE |
| l | Zählvariable |
| ln | natürlicher Logarithmus |
| mi | Ersatzwert für mH |
| mH | Parameter für die Wärmetauscher in den Gebäuderäumen |
| M | Wandtemperatur als Mittelwert der Temperaturen aller gebäuderaumseitigen Wandoberflächen der Gebäudemassen einschließlich der Oberflächen aller wärmespeichernden Einrichtungsgegenstände der vom Heizkreis beheizten Gebäuderäume |
| M(t) | Wandtemperatur mit besonderer Kennzeichnung der Zeitabhängigkeit |
| M(t0) | Wandtemperatur, berechneter Wert für Zeitpunkt t0 |
| n | Variable im Zeitbereich (tq + KR)...(tq + (tq-t0)/KR) |
| N | Nenner in der Gleichung für V |
| p | Zählvariable |
| p1 | Reziproker Wert der Zeitkonstante für die Raumlufttemperatur nach Patent DE 2813 081 |
| p2 | Reziproker Wert der Zeitkonstante für die Raumlufttemperatur nach Patent DE 2813 081 |
| R | Rücklauftemperatur allgemein, Augenblickswert |
| R0 | Rücklauftemperatur für Parameterberechnung |
| R(j*T1) | Rücklauftemperatur zum Zeitpunkt t0 + j*T1 |
| R((j + 1)*T1) | Rücklauftemperatur zum Zeitpunkt t0 + (j + 1)*T1, |
| Rn | Nennwert der Rücklauftemperatur |
| R(ta) | Rücklauftemperatur zum Zeitpunkt ta |
| R(te) | Rücklauftemperatur zum Zeitpunkt te |
| R(tq) | Rücklauftemperatur zum Zeitpunkt tq |
| Ru | Rücklauftemperatur beim Beginn der Schnellaufheizung |
| RE | Rücklauftemperatur am Ende der Schnellaufheizung |
| RL | Rücklauftemperatur während des Zeitabschnittes tL |
| RLX | Maximalwert der Rücklauftemperatur am Ende des linearen Anstiegs während der Schnellaufheizung |
| RX | Maximalwert der Rücklauftemperatur, aus VX berechnet |
| s0 | Temperaturverhältnis aus gemessenen Werten, Parameter |
| sH | Mittelwert von s0 |
| sn | Temperaturverhältnis aus Nennwerten, Konstante |
| S | Zeitpunkt für das Ende des ersten Zeitintervalles |
| t | Echtzeit |
| t0 | Zeitpunkt für die Speicherung des ersten Wertes R(j*T1) nach Beginn des Zwischen- |

EP 0 308 806 B1

| | | |
|---|---|---|
| | | zeitintervalles |
| | t2 | Sollwert des Zeitpunktes für das Ende der Schnellaufheizung nach Patent DE 2813 081 |
| | t4 | Zeitpunkt für das Ende des kurzfristigen Anstieges der Raumlufttemperatur nach Patent DE 2813 081 |
| | t10 | Zeitpunkt für den Beginn der Schnellaufheizung nach Patent DE 2813 081 |
| | ta | Zeitpunkt ta = t0 + a*T1 |
| | tb | Zeitpunkt während der Schnellaufheizung nach Patent DE 2813 081 |
| | te | Zeitpunkt te = t0 + e*T1 |
| | ti | Anstiegszeit der Vorlauftemperatur auf den stationären Sollwert bei Stützung der Raumlufttemperatur |
| | tm | Zeitpunkt der Messung von TLm |
| | tq | Zeitpunkt für den Beginn der Gleichsetzung von I = R |
| | tw | Anstiegszeit der Rücklauftemperatur auf den stationären Sollwert während der Stützung der Wandtemperatur |
| | tz | Zeitpunkt für das Auftreten von z bei der Schnellaufheizung nach Patent DE 2813 081 |
| | tD | Zeit zwischen dem Ansteigen der Vorlauftemperatur und der Rücklauftemperatur beim Beginn der Schnellaufheizung |
| | tE | Zeit für den exponentiellen Anstieg der Rücklauftemperatur während der Schnellaufheizung |
| | tL | Zeit für den linearen Anstieg der Rücklauftemperatur während der Schnellaufheizung |
| | tLX | Maximalwert von tL |
| | tS | Einschaltzeitpunkt für die Schnellaufheizung |
| | tSt | Zeitpunkt beim Beginn der Stützung der Wandtemperatur |
| | tStr | Zeitpunkt beim Beginn der Stützung der Raumlufttemperatur |
| | Tr | Übergangstemperatur anstelle der Außentemperatur während der Stützung der Raumlufttemperatur |
| | Te | Kennlinie für den Einschaltzeitpunkt der Schnellaufheizung nach Patent DE 2813 081 |
| | TL | gemessene Raumlufttemperatur nach Patent DE 2813 081 |
| | TLm | Meßwert für die Raumlufttemperatur während der Schnellaufheizung nach Patent DE 2813 081 |
| | TLE | maximale Raumlufttemperatur nach Patent DE 2813 081 |
| | Tn | Sollwert der Raumlufttemperatur nach Patent DE 2813 081 |
| | T1 | Abtastperiode für die Rücklauftemperatur von t0 bis t0 + KR |
| | T2 | Abtastperiode für die Rücklauftemperatur für t0 + KR...tq |
| | T3 | Abtastperiode für die Rücklauftemperatur für (tq + T3)...(tStr oder tSt oder tS) |
| | T4 | Abtastperiode im Zeitbereich tL |
| | T5 | Abtastperiode während des kurzfristigen Anstieges der Raumlufttemperatur während der Schnellaufheizung (Patent DE 2813 081) |
| | T6 | Abtastperiode während des langfristigen Anstieges der Raumlufttemperatur während der Schnellaufheizung (Patent DE 2813 081) |
| | TWE | maximale Wandoberflächentemperatur nach Patent DE 2813 081 |
| | V | Vorlauftemperatur, berechneter Sollwert |
| | V0 | Vorlauftemperatur für Parameterberechnung |
| | Vist | Vorlauftemperatur, gemessener Istwert |
| | Vn | Nennwert der Vorlauftemperatur |
| | Vo | Vorlauftemperatur, oberer Sollwert während der Schnellaufheizung |
| | VX | Vorlauftemperatur, gemessenes Maximum des zeitlichen Mittelwertes |
| | W | Sollwert der Raumlufttemperatur während des ersten Zeitintervalles |
| | xH | für alle Werte von mH und mi |
| | Yi | unterer Exponent zur Basis B0 mit I = IH |
| | z | Temperaturverhältnis zur Berechnung von p2 |

Ersatzwerte:

An = -15°C; In = 20°C; Rn = 70°C: Vn = 90°C;

W = 21°C; Kmin = 6°C; dRL = 0,5°C/min; dM = -0,5°C/h

VX = 60°C; IH-It = 3°C

16

Fi =    1; mi = 1,3; T1 = 15min; T2 = 60min; T3 = 120min; T4 = 2min
T5 =    10min; T6 = 60min; KR = 75min; KG = 20h; KS = 60min; tD = 8min;
ti =    6h; tw = 40min

**Patentansprüche**

1. Verfahren zur sich selbsttätig anpassenden Steuerung der Temperatur mindestens eines Gebäuderaumes, in welchem zur Optimierung des Energieverbrauches während vorbestimmter erster Zeitintervalle zur Beeinflussung der Raumtemperatur dem betreffenden Raum durch mindestens einen Wärmetauscher eines Heizkreises, der einen Heizungsvorlauf und einen Heizungsrücklauf für einen in ihm strömenden Wärmeträger aufweist, Energie zugeführt wird, um die Raumtemperatur mit einem vorbestimmten Sollwert zu steuern, wobei im Heizkreis die Heizungsvorlauftemperatur in Abhängigkeit von der Außentemperatur gemäß einer Heizkennlinie geführt wird,

wogegen am Anfang jedes Zwischenzeitintervalles, das jeweils zwischen zwei ersten Zeitintervallen liegt, die Energiezufuhr zum Heizkreis abgeschaltet wird und die Raumtemperatur absinkt bis die Energiezufuhr wieder eingeschaltet wird, um die Raumtemperatur auf dem Wert der Stütztemperatur zu steuern,

dadurch gekennzeichnet,

daß die Raumtemperatur nach dem humanen Wärmeempfinden als Summe der gewichteten Raumlufttemperatur (I) und der gewichteten Wandtemperatur (M) aller gebäuderaumseitigen Wandoberflächen der Gebäudemassen einschließlich der Oberflächen aller wärmespeichernden Einrichtungsgegenstände der vom Heizkreis beheizten Gebäuderäume, berechnet oder gemessen und nach ihrem Sollwert gesteuert wird,

wobei die Anpassung mindestens eines Parameters der Heizkennlinie durch die Auswertung mindestens eines der gefühlten Werte der Vorlauftemperatur (Vist) am Eingang des Heizkreises, der Rücklauftemperatur (R) am Ausgang des Heizkreises, der Außentemperatur (A), vorgenommen wird,

wobei, mit den am Schluß der Beschreibung erklärten Symbolen und mit dem Zeichen * als Multiplikationssymbol, für die Heizkennlinie folgende Gleichung gilt

$$V = I + s0^{*}(I-A)^{*}F0/N \qquad (1.1)$$

mit der Abkürzung

$$N = 1 - B0^{-((I-A)/(In-AH))^{(1-1/mH)}} \qquad (1.2)$$

    mit den Bedingungen A < = I und I-A < = In-An,
mit Sollwerten für die Raumlufttemperatur

    I = W      während des ersten Zeitintervalles zur Steuerung der Normaltemperatur mit vorbestimmtem W

    I = K      während des Zwischenzeitintervalles zur Stützung der Wandtemperatur (M)

    I = K      und einer transformierten Außentemperatur Tr während des Zwischenzeitintervalles zur Stützung der Raumlufttemperatur mit vorbestimmtem K

    I = ISt     während des Zwischenzeitintervalles zur Stützung der Wandtemperatur (M) auf einem Wert höher als K

    I = IStb    während des Zwischenzeitintervalles zur Stützung der Wandtemperatur (M) auf einem Wert höher als K
                 bei abnehmender Außentemperatur

mit weiteren Parametern für die Gleichungen (1.1) und (1.2)

    s0 = (V0-R0)/(IH-A0) mit dem Ersatzwert sn = (Vn-Rn)/(In-An)    (1.3)

    B0 = (V0-IH)/(R0-IH) mit dem Ersatzwert Bn = (Vn-In)/(Rn-In)    (1.4)

    F0 = (V0-IH)*N/(V0-R0)    (1.5)

    mit I = IH und stationärem Verhalten von Vist-V, R, A,

sowie dem Ersatzwert Fi

$$IH = (I0 + V0 - R0 + sH*A0)/(1 + sH) \qquad (1.6)$$

mit den Ersatzwerten An für AH, mi für mH, sn für sH, wobei A0, R0, V0 die während des ersten Zeitintervalles bei einer Außentemperatur AH <= A < W gemessenen stationären Werte der Außen-, Rücklauf- und Vorlauftemperatur sind, wobei die am Schluß der Beschreibung angegebenen Ersatzwerte für die Parameter immer dann in die Gleichungen (1.1), (1.2) eingesetzt werden, wenn Meß- oder Rechenwerte dafür noch nicht vorliegen, wobei die Ersatzwerte sn, Bn, mi vorbestimmt werden nach den Bauvorschriften für Heizungsanlagen, der Ersatzwert An die tiefste Außentemperatur für den Gebäudestandort darstellt, der Ersatzwert Fi für F0 von den Gebäudeeigenschaften abhängt,
wobei sH den Mittelwert von mindestens zwei Werten von s0 darstellt, der bei mittleren bis tiefen Außentemperaturen der Heizperiode und mit eingeengten Toleranzen für das stationäre Verhalten von Vist-V, R, A gebildet wird

$$sH = (s01 + s02 + ... + s0p)/p \qquad (1.7)$$

wobei I0, als Mittelwert der Raumlufttemperaturen aller vom Heizkreis beheizten Gebäuderäume, aus dem Verlauf der Rücklauftemperatur (R) nach dem Beginn des Zwischenzeitintervalles berechnet wird, wobei die mittlere Steigung der Rücklauftemperatur während der Abtastperiode T1, als Zeit zwischen zwei Meßpunkten der Rücklauftemperatur, mit der Gleichung (2.1) berechnet und zusammen mit den Meßwerten R(j*T1) und den Zeitpunkten j*T1 gespeichert wird, wobei

$$dR(j*T1) = (R((j+1)*T1) - R(j*T1))/T1 \qquad (2.1)$$

mit j = 0, 1, 2, ... und j*T1 = t - t0
und dR(j*T1) < 0
wobei Klammerausdrücke hinter den Symbolen von abhängigen Variablen den Wert der unabhängigen Variablen darstellen,
wobei t0 mit dem Ende des ersten Zeitintervalles (S) zusammenfällt oder von (S) einen Abstand hat, der so getroffen ist, daß die Rücklauftemperatur zum Zeitpunkt t0 nicht höher ist als ihr Augenblickswert oder gleitender Mittelwert zum Zeitpunkt (S), und der Zeitpunkt, zu welchem das Minimum von dR(j*T1) auftritt, mit ta = t0 + a*T1 bezeichnet wird, und der Zeitpunkt, zu welchem die Bedingung

$$dR(e*T1) > dR(a*T1)/2 \qquad (2.2)$$

erfüllt wird, mit te = t0 + e*T1 bezeichnet und mit diesen Meßwerten die Zeitkonstante KR berechnet wird, mit welcher sich die Rücklauftemperatur nach einer Exponentialfunktion der Raumlufttemperatur nähert

$$KR = (te-ta)/(-ln(dR(te)/dR(ta))) \qquad (2.3)$$

und damit die Raumlufttemperatur zu den gleichen Zeitpunkten ta, te

$$I(ta) = R(ta) + KR*dR(ta) \qquad (2.4)$$

$$I(te) = R(te) + KR*dR(te) \qquad (2.5)$$

und mit der Steigung der Raumlufttemperatur zum Zeitpunkt ta

$$dI(ta) = (I(te)-I(ta))/(te-ta) \qquad (2.6)$$

die Raumlufttemperatur I0 zum Zeitpunkt t0 berechnet wird zu

$$I0 = I(ta) + (t0-ta)*dI(ta) \qquad (2.7)$$

womit die Raumlufttemperatur IH mit Berücksichtigung der Heizlast nach Gleichung (1.6), B0 nach Gleichung (1.4), s0 nach Gleichung (1.3), F0 nach Gleichung (1.5) berechnet werden,

der angepaßte Wert mH nach der Gleichung

$$mH = mi + ((FH(b+c) - FH(b))*AF(b+c))/(2*(In-An)*F0'(b+c)) \qquad (3)$$

c = 1, 2, oder höher, und 1 < mH < 2

ersatzweise F0(b+c) und A0 für FH(b+c) und AF(b+c) berechnet wird, wobei FH(b+c) als Mittelwert von F0 bei hohen Außentemperaturen und FH(b) bei tiefen Außentemperaturen gebildet wird, AF(b+c) der Mittelwert der Außentemperaturen ist, die bei der Bildung von FH(b+c) gemessen wurden, AF(b+c) mindestens 10°C höher ist als der Mittelwert AF(b), welcher zusammen mit FH(b) gebildet wird,

wobei die Ableitung F0' nach mi der Gleichung folgt

$$F0' = (-(V0-IH)*(B0^{-Yi^{(1-1/mi)}})*\ln(B0^{-Yi}))/(V0-R0)/mi^2 \qquad (4)$$

mit Yi = (IH-A)/(In-An),

wobei mi nur solange als Ersatzwert für mH eingesetzt wird, bis ein erster Wert von mH berechnet ist, die tiefste angepaßte Außentemperatur AH mit der Gleichung

$$AH = In - (VX-In)*(1-1/BH)/FH/sH \qquad (5)$$

berechnet wird und in die Gleichungen für V, F0, F0' eingesetzt wird, wenn AH > An ist, wobei der Ausdruck (1-1/BH)/FH als Mittelwert von mehreren Ausdrücken (1-1/B0)/F0 mit jeweils im unteren Außentemperaturbereich gleichzeitig gemessenen Wertepaaren von B0, F0 nach Gleichung (12.4) gewonnen wird, wobei VX den maximalen Wert der Vorlauftemperatur (Vist) darstellt, welcher bei maximaler Energiezufuhr mindestens einer Heizperiode gemessen wird, wobei der gleitende Mittelwert von (Vist) nach Gleichung (15) berechnet wird,

daß die Stütztemperatur (K) mit dem näherungsweise minimal möglichen Sollwert der Vorlauftemperatur (V) und durch Berücksichtigung der Wärmeabgabe der die Gebäuderäume umschließenden Wände und der wärmespeichernden Einrichtungsgegenstände in den Gebäuderäumen gesteuert wird, indem während des Zwischenzeitintervalles bis zum Zeitpunkt t0+KR die Raumlufttemperatur I(j*T1) unter Berücksichtigung der Gleichung (2.1) berechnet wird,

$$I(j*T1) = R(j*T1) + KR*dR(j*T1) + IH - I0 \qquad (6.1)$$

mit j = 0, 1, 2, ... und j*T1 = t - t0

nach dem Zeitpunkt t0+KR bis zur vorbestimmten Annäherung q der Rücklauftemperatur an die Raumlufttemperatur, mit längerer Abtastperiode T2 berechnet wird,

$$I(j*T2) = R(j*T2) + KR*dR(j*T2) + IH - I0 \qquad (6.2)$$

mit j = 0, 1, 2, ... und j*T2 = t - (t0+KR)

die Wandtemperatur (M) berechnet wird, wobei der Wärmeträger im Heizkreis weiterhin zwangsweise bewegt wird, nach der zulässigen Toleranz q für die Bestimmung der Raumlufttemperatur zum Zeitpunkt tq,

definitionsgemäß q = (R(tq)+IH-I0 - I(tq))/R(tq)

oder mit gemessenen Werten

$$q = -KR*dR(tq)/R(tq) \text{ mit } 0 < q < 0,1$$

berechnet wird, wobei nach dem Zeitpunkt tq = t0 - KR*ln(q) die gemessene Rücklauftemperatur (R) im Heizkreis dem Mittelwert der Raumlufttemperaturen (I) aller Gebäuderäume gleichgesetzt wird, deren Wärmetauscher vom Wärmeträger des Heizkreises durchströmt werden,

$$R(t-tq) = I(t-tq) \qquad (6.3)$$

die Wandtemperatur (M) nach dem Zeitpunkt tq mit höherem Augenblickswert als die Raumlufttemperatur und gleicher Steigung dM wie die Raumlufttemperatur verläuft,

$$dM(tq) = (R(tq + n*KR) - R(tq))/(n*KR) \qquad (6.4)$$

mit $1 <= n <= (tq-t0)/KR$, $dM < 0$ und $A < K$ und nicht ansteigend, n je nach der verfügbaren Zeit und dem Verlauf der Außentemperatur,
wobei für den Wert lt, als der auf den Zeitpunkt t0 extrapolierten Sekante an die Rücklauftemperatur im Zeitpunkt tq mit der Steigung nach Gleichung (6.4), die Gleichung

$$lt = R(tq) - (tq-t0)*dM(tq) \qquad (6.5)$$

gilt, wodurch die Wandtemperatur (M) im Zeitpunkt t0 bestimmt ist durch

$$M(t0) = (IH + lt)/2, \qquad (6.6)$$

die Steigung der Wandtemperatur dM wie auch die Steigung der Rücklauftemperatur (R) und der Raumlufttemperatur (I) nach dem Zeitpunkt tq mit längerer Abtastperiode T3 der Gleichung

$$dM(j*T3) = (R(j*T3) - R((j-1)*T3))/T3 \qquad (6.7)$$

mit $j = 1, 2, 3,...$ und $tq + T3 <= j*T3 < (tStr$ oder $tSt$ oder $tS)$ folgt,
mit der Differenz von Rücklauftemperatur (R) und Außentemperatur (A) zu den entsprechenden Zeitpunkten, einschließlich der Steigung und des Zeitbereiches nach Gleichung (6.4), die Zeitkonstante

$$KG(j*T3) = (R(j*T3) - A(j*T3)/2 - A((j-1)*T3)/2)/dM(j*T3) \qquad (6.8)$$

näherungsweise berechnet wird, welche für die Temperaturbereiche AF(b) und bei längeren Absenkzeiten auch für Zeitbereiche von beispielsweise 10*T3 gespeichert werden, wobei bei bekannten gleitenden Mittelwerten der Rücklauftemperatur (R) und Außentemperatur (A) die Ersatzwerte der Steigung der Wandtemperatur und der Raumlufttemperatur

$$dM(t) = (R(t) - A(t))/KG(t) \qquad (6.9)$$

berechnet werden, um damit bei abgeschalteter Heizkreispumpe die Raumlufttemperatur (I) durch Extrapolation zu berechnen,
der Verlauf der Wandtemperatur (M) bestimmt wird durch,

$$M(t) = IH - (IH-lt)/2 + (t-t0)*dM(tq) \text{ für } t0...tq \qquad (7.1)$$

$$M(t) = R + (IH-lt)/2 \text{ für } tq...tS \text{ oder } tq...tSt \text{ oder } tq...tStr, \qquad (7.2)$$

die Wandtemperatur während der Stützung der Raumlufttemperatur nach Gleichung (7.7) bis zum Erreichen der stationären Wandtemperatur (M) mit dM<0 und A<K den Gleichungen (7.3), (6.4), (6.7) folgt,

$$M(t) = R(tStr) + (IH-lt)/2 + (t-tStr)*dM(tStr) \text{ für } tStr...tStr + ti \qquad (7.3)$$

$$\text{mit } ti = (IH-lt)/dM(tStr) \qquad (7.4)$$

$$dM(tStr) = dM(tq) \text{ für } t0...tq + (tq-t0) \qquad (7.5)$$

$$dM(tStr) = dM(j*T3) \text{ für } tq + T3 <= j*T3 < tStr \qquad (7.6)$$

wobei der Sollwert der Vorlauftemperatur berechnet wird gemäß den Gleichungen (1.1), (1.2), wobei anstelle der Außentemperatur (A) die transformierte Außentemperatur Tr mit ti nach Gleichung (7.4) eingesetzt wird,

20

EP 0 308 806 B1

Tr = K - (K-A)*(t-tStr)/ti für t = tStr...tStr + ti      (7.7)

Tr = A für t > tStr + ti

oder daß die Stütztemperatur mit einem Sollwert höher als K gesteuert wird, indem während des Zwischenzeitintervalles mit der berechneten Wandtemperatur (M) die Vorlauftemperatur Vo periodisch berechnet wird, wobei die Behaglichkeitstemperatur IB durch

IB = W - (IH - It)/4      (8.1)

des nächstfolgenden ersten Zeitintervalles und die erforderliche obere Raumlufttemperatur Io bestimmt ist durch,

Io = 2*IB - M(t)      (8.2)

die im Zeitabschnitt t0...tS periodisch berechnete Vorlauftemperatur

Vo = Io + sH*(Io-A)*FH/N      (8.3)

   mit

$$N = 1 - BH^{-((Io-A)/(In-AH))^{(1-1/mH)}} \qquad (8.4)$$

ersatzweise B0 für BH, F0 für FH, s0 für sH, An für AH, mi für mH,
verglichen wird mit der zur Verfügung stehenden maximalen Vorlauftemperatur VX, wobei der Zeitpunkt tSt für den Beginn der Stützung eintritt, wenn die Vorlauftemperatur Vo > = VX wird, worauf gleichzeitig Io(tSt), M(tSt), A(tSt) gespeichert werden, wobei die Wandtemperatur (M) mit

ISt = M(tSt) + (IH-It)/2      (8.5)

und den Gleichungen (1.1), (1.2) mit I = ISt
auf ihrem zulässigen Minimalwert M(tSt) gestützt wird, solange die Außentemperatur den Wert A(tSt) nicht unterschreitet,
wogegen beim Absinken der Außentemperatur unter den Wert A(tSt) auch der Wert der periodisch berechneten oberen Raumlufttemperatur Io absinkt und die Differenz dIo = Io(tst) - Io gegebenenfalls iterativ berechnet und damit der nachgeführte, berichtigte Sollwert

IStb = ISt + dIo      (8.6)

in die Gleichung für die Vorlauftemperatur eingeführt wird.

**2.** Verfahren zur sich selbsttätig anpassenden Steuerung der Temperatur mindestens eines Gebäuderaumes, in welchem zur Optimierung des Energieverbrauches während vorbestimmter erster Zeitintervalle zur Beeinflussung der Raumtemperatur dem betreffenden Raum durch mindestens einen Wärmetauscher eines Heizkreises, der einen Heizungsvorlauf und einen Heizungsrücklauf für einen in ihm strömenden Wärmeträger aufweist, Energie zugeführt wird, um die Raumtemperatur mit einem vorbestimmten Sollwert zu steuern, wobei im Heizkreis die Heizungsvorlauftemperatur in Abhängigkeit von der Außentemperatur gemäß einer Heizkennlinie geführt wird,
oder bei abgesenkter Raumtemperatur die Energiezufuhr zum Heizkreis so rechtzeitig auf Schnellaufheizung geschaltet wird, daß die Normaltemperatur in annähernd kürzester Zeit ungefähr am Ende des Zwischenzeitintervalles erreicht wird, wozu zur Berechnung des erforderlichen Einschaltzeitpunktes eine Kennlinie benutzt wird,
dadurch gekennzeichnet,
daß die Raumtemperatur nach dem humanen Wärmeempfinden als Summe der gewichteten Raumlufttemperatur (I) und der gewichteten Wandtemperatur (M) aller gebäuderaumseitigen Wandoberflächen der Gebäudemassen einschließlich der Oberflächen aller wärmespeichernden Einrichtungsgegenstände der vom Heizkreis beheizten Gebäuderäume, berechnet oder gemessen und nach ihrem Sollwert

21

gesteuert wird,

wobei die Anpassung mindestens eines Parameters der SCHNELLAUFHEIZKENNLINIE durch die Auswertung mindestens eines der gefühlten Werte der Vorlauftemperatur (Vist) am Eingang des Heizkreises, der Rücklauftemperatur (R) am Ausgang des Heizkreises, der Außentemperatur (A), vorgenommen wird,

wobei die am Schluß der Beschreibung erklärten Symbole und das Zeichen * als Multiplikationssymbol für die folgenden Gleichungen gelten,

wobei mit dem Verlauf der Wandtemperatur (M)

$$M(t) = IH - (IH-It)/2 + (t-t0)*dM(tq) \text{ für } t0...tq \qquad (7.1)$$

$$M(t) = R + (IH-It)/2 \text{ für } tq...tS \text{ oder } tq...tSt \text{ oder } tq...tStr \qquad (7.2)$$

$$\text{mit } dM(tq) = (R(tq+n*KR) - R(tq))/(n*KR) \qquad (6.4)$$

$$1 <= n <= (tq-t0)/KR, \, dM < 0 \text{ und } A < K \text{ und nicht ansteigend}$$

$$KR = (te-ta)/(-\ln(dR(te)/dR(ta))) \qquad (2.3)$$

$$dR(j*T1) = (R((j+1)*T1) - R(j*T1))/T1 \qquad (2.1)$$

$$M(t) = R(tStr) + (IH-It)/2 + (t-tStr)*dM(tStr) \text{ für } tStr...tStr+ti \qquad (7.3)$$

$$\text{mit } dM < 0 \text{ und } A < K, \, ti = (IH-It)/dM(tStr) \qquad (7.4)$$

$$dM(tStr) = dM(tq) \text{ für } t0...tq+(tq-t0) \qquad (7.5)$$

$$dM(tStr) = dM(j*T3) \text{ für } tq+T3 <= j*T3 < tStr \qquad (7.6)$$

$$\text{mit } dM(j*T3) = (R(j*T3) - R((j-1)*T3))/T3 \qquad (6.7)$$

mit j = 1, 2, 3,... und tq+T3 <= j*T3 < (tStr oder tSt oder tS)

die Behaglichkeitstemperatur IB

$$IB = W - (IH - It)/4 \qquad (8.1)$$

des nächstfolgenden ersten Zeitintervalles für die erforderliche obere Raumlufttemperatur Io

$$Io = 2*IB - M(t) \qquad (8.2)$$

näherungsweise bestimmt wird,

daß der Einschaltzeitpunkt für die Schnellaufheizung mit einer aus dem Verlauf der Rücklauftemperatur ermittelten Schnellaufheizkennlinie berechnet wird, wobei der Abschaltzeitpunkt erreicht wird, wenn die Rücklauftemperatur während der Schnellaufheizung den stationären Wert der Rücklauftemperatur des nächstfolgenden ersten Zeitintervalles, erreicht oder überschreitet,

wobei die Schnellaufheizkennlinie aus mindestens eimem der Abschnitte mit der Dauer tD, tL, tE besteht, deren Summe auf Null gesetzt wird wenn tL = tE = 0 ist, deren Summe während des Zwischenzeitintervalles fortwährend verglichen wird mit der Zeitdifferenz zwischen dem Zeitpunkt (C) des Beginns des nächstfolgenden ersten Zeitintervalles und der Echtzeit (t), sodaß der Zeitpunkt für den Beginn der Schnellaufheizung durch die Bedingung

$$tD + tL + tE >= C - t \qquad (8.7)$$

bestimmt wird,

wobei die Rücklauftemperatur nach dem Einschaltzeitpunkt tS im Zeitabschnitt tE näherungsweise exponentiell gegen ihren Maximalwert

$$RX = VX - sH*(Io - A), \qquad (8.8)$$

ersatzweise sn für sH,

ansteigt, bis sie den in der Regel tiefer liegenden stationären Wert RE des nächstfolgenden ersten Zeitintervalles erreicht hat,

wobei die untere Raumlufttemperatur (Iu) beim Einschaltzeitpunkt tS der Schnellaufheizung und die mögliche Zunahme IL der Raumlufttemperatur während des Zeitabschnittes tL in der folgenden Tabelle (8.9) zusammengestellt sind,

```
                        Tabelle                        (8.9)

Raumlufttemperatur                      Zeitabschnitt für t


Iu(j*T1) = R(j*T1) + KR*dR(j*T1) + IH-IO      für t0...t0+KR

Iu(j*T2) = R(j*T2) + KR*dR(j*T2) + IH-IO      für t0+KR...tq

IL = IH - Iu                                  für t0...tq

Iu = R                      für tq...tS oder tq...tSt oder tq...tStr

IL = IH - It                für tq...tS oder tq...tSt oder tq...tStr

Iu = I(tSt) + (IH-It)*(t-tSt)/tw              für tSt...tSt+tw

IL = (IH-It)*(tw+tSt-t)/tw                     für tSt...tSt+tw

Iu = I(tStr)                                  für tStr...tStr+ti

IL = (IH-It)*(ti+tStr-t)/ti                    für tStr...tStr+ti

Iu = I(tSt) + IH-It                            für tSt+tw...tS

IL = 0                                        für tSt+tw...tS

Iu = I(tStr)                                  für tStr+ti...tS

IL = 0                                        für tStr+ti...tS
```

wobei mit den Tabellenwerten Iu, IL abhängig von der Zeit t-t0,
oder nach dem Beginn einer der Stützungen abhängig von der Zeit t-tSt oder t-tStr, die Rücklauftemperatur RL näherungsweise den maximalen Wert RLX annimmt,

$RLX = Iu + IL + (FH/N-1)*sH*(Iu + IL-A)$     (9.1)

mit

$$N = 1 - BH^{-((Iu+IL-A)/(In-AH))^{(1-1/mH)}} \qquad (9.2)$$

Iu + IL = Io für Iu + IL > = Io

ersatzweise B0 für BH, F0 für FH, s0 für sH, An für AH, mi für mH,
die periodisch berechnete Zeit für den linearen Anstieg der Rücklauftemperatur mit RL als dem kleinsten der drei Werte RX, RE, RLX näherungsweise der Gleichung (9.3) folgt

$tL = (RL - Ru)/dRL$     (9.3)

mit tL = 0 für RL < = Ru,
Ru = R(tS) als Wert der Rücklauftemperatur beim Beginn der Schnellaufheizung,
wobei für dRL zunächst der Ersatzwert eingesetzt wird, dann der Mittelwert von gemessenen Differen-

EP 0 308 806 B1

zenquotienten der Rücklauftemperatur, die während einer Schnellaufheizung ohne vorhergehende Stützung gewonnen wurden,

$$dRL = (dRL(k) + dRL(k+1) + ... + dRL(k+p))/(p+1) \qquad (9.4)$$

$$k = 0, 1, 2, ... \text{ und } k^*T4 = t - (tS + tD)$$
$$\text{mit } dRL(k) = (RL((k+1)^*T4) - RL(k^*T4))/T4$$

und der Zuordnung des ersten Abtastwertes dRL(k) > 0 zu dem Zeitpunkt tS + tD,
wobei im Zeitabschnitt tE die Rücklauftemperatur für den Sollwert Io des nächstfolgenden ersten Zeitintervalles berechnet wird

$$RE = Io + (FH/N-1)^*sH^*(Io-A) \qquad (9.5)$$

mit

$$N = 1 - BH^{-((Io-A)/(In-AH))^{(1-1/mH)}} \qquad (9.6)$$

ersatzweise B0 für BH, F0 für FH, s0 für sH, An für AH, mi für mH,
wobei in Gleichung (9.5), (9.6) der Wert für die Außentemperatur A <= A(tS) bei ansteigender Außentemperatur beibehalten wird, bis RE erreicht ist, wobei die Zeitdauer tE berechnet wird,

$$tE = KS^*ln(1 - (RE-RLX)/(RX-RLX)) \qquad (9.7)$$

$$tE = 0 \text{ für } RE <= RLX, RX <= RLX$$
$$\text{mit } RLX = Ru \text{ nach dem Zeitpunkt tSt + tw oder tStr + ti,}$$
$$RLX < RE < RX,$$

wobei KS die Zeitkonstante für den durch eine Exponentialfunktion angenäherten Verlauf der Rücklauftemperatur darstellt, die Rücklauftemperatur Rm = (RX-Ru)/2, oder bei vorhergehender Abschaltung der Schnellaufheizung bei einem niedrigeren Wert der Rücklauftemperatur Rm < RE, zusammen mit dem Zeitpunkt tm, bei welchem Rm erreicht wurde, gemessen und daraus KS berechnet wird,

$$KS = (tm - (tS + tD))/(-ln((RX-Rm)/(RX-Ru))) \qquad (9.8)$$

wobei alternativ zu Gleichung (9.4) RL-Ru meßtechnisch verbessert wird, indem die Differenzmessungen dRL(k) im Zeitbereich von tE weitergeführt werden, und zu jedem Wert k die Echtzeit und der Wert der Rücklauftemperatur gespeichert werden, und bei jeder geradzahligen Anzahl von Werten dRL(k) die Differenz aus den folgenden Mittelwerten gebildet wird,

$$(dRL(1) + ... + dRL(p/2))/(p/2) - (dRL(p/2+1) + ... + dRL(p))/(p/2) \qquad (9.9)$$

und an der Stelle p/2, bei welcher ein Maximum oder eine konstante Differenz, die größer ist als die Anfangsdifferenzen, auftritt, die Rücklauftemperatur in die Beziehung eingesetzt wird,

$$dRL = (R(p/2) - Ru)/(T4^*p/2),$$

oder daß mindestens ein Parameter der EINSCHALTTEMPERATUR-KENNLINIE angepaßt wird, die durch die folgenden beiden Gleichungen mit eingesetzten Abkürzungen dargestellt wird,

$$Te = Tn - (0,5^*(TLE + TWE) - Tn)^*(exp(p1^*(t2-t)) - 1) - 0,5^*(TLE-TWE) + 0,5^*(TLE-TWE)^*exp(-p2^*(t2-tb))- \qquad (10.1)$$

$$Te = Tn - (0,5^*(TLE + TWE) - Tn)^*(exp(p1^*(t2-t)) - 1) - 0,5^*(TLE-TWE)^*exp(-p2^*(t-tb)) + 0,5^*(TLE-TWE)- \\ {}^*exp(-p2^*(t2-tb)) \qquad (10.2)$$

der Sollwert Tn vorbestimmt ist, die maximale Raumlufttemperatur TLE gemessen wird oder gleichzu-

24

setzen ist mit der berechneten Raumlufttemperatur Io mit

$$Vo = Io + sH^*(Io-A)^*FH/N \qquad (8.3)$$

mit

$$N = 1 - BH^{-((Io-A)/(In-AH))^{(1-1/mH)}} \qquad (8.4)$$

und Vo ≥ VX
ersatzweise B0 für BH, F0 für FH, s0 für sH, An für AH, mi für mH,
die maximale Wandtemperatur TWE aus dem Verlauf der Raumlufttemperatur während der Schnellaufheizung gewonnen wird, wobei die Raumlufttemperatur nach Beginn der Schnellaufheizung beim Zeitpunkt tS mit der Abtastperiode T5 abgetastet wird und die Differenzenquotienten

$$dTL(j^*T5) = (TL((j+1)^*T5) - TL(j^*T5))/T5 \qquad (10.3)$$

mit j = 0, 1, 2, ... und j*T5 = t-tS
berechnet und zusammen mit der abgetasteten Raumlufttemperatur TL(j*T5) und dem Zeitpunkt tS + j*T5 gespeichert werden, mit dem Maximalwert dTLX der Steigung der Raumlufttemperatur und den Abkürzungen

$$h = dTLX - dTL(j^*T5) \text{ und } f = (dTL((j+4)^*T5) - dTL(j^*T5))/4$$

das Verhältnis z = f/(h + 4*f) berechnet wird, und sobald z in den Bereich 0,02 < z < 0,06 eintritt, der Zeitpunkt tz und der Wert von z gespeichert werden und damit

$$p2 = (lnz)/(tz-tS) \qquad (10.4)$$

berechnet wird, wobei näherungsweise dem Zeitpunkt tS der Wert dTLX zugeordnet wird,
mit dem Differenzquotienten

$$dTL(j^*T6) = (TL((j+1)^*T6) - TL(j^*T6))/T6$$

mit j = 0, 1, 2, ... und j*T6 = t - (tz + 4*T5)
für den langfristigen Anstieg der Raumlufttemperatur die Differenz TLE-TWE nach Gleichung (10.5) berechnet wird,

$$TL(tz) - TL(tS) - (tz-tS)^*dTL(j^*T6) = TLE - TWE \qquad (10.5)$$

und die Zeitpunkte tz = t4 und tS = t10 sind,
mit der Steigung des langfristigen Einschwingvorganges der Raumlufttemperatur, der durch die Wandtemperatur (M) bestimmt wird, die Raumlufttemperatur mit der Abtastperiode T6 gemessen und die reziproke Zeitkonstante p1 berechnet wird als

$$p1 = (TL((j+1)^*T6) - TL(j^*T6))/(TLE - TL(tz + 4^*T5))/T6 \qquad (10.6)$$

mit j = 0, 1, 2, ... und j*T6 = t - (tz + 4*T5)
oder auch analog zur Gleichung (9.8)

$$p1 = (-ln((TLE - TLm)/(TLE - TL(tz + 4^*T5)))/(tm - (tz + 4^*T5)) \qquad (10.7)$$

wobei tm und TLm gleichzeitig gemessen werden mit TLm ungefähr in der Mitte zwischen TL-(tz + 4*T5) und TLE.

3. Verfahren nach Anspruch 1 oder 2, dadurch gekennzeichnet,
daß als Anfangswerte oder als Ersatzwerte für die Berechnung der Parameter der Heizkennlinie B0, F0, s0, mH, AH die Werte eingesetzt werden, welche aufgrund von Normen oder Vorschriften beim Bau der Heizungsanlagen und Gebäuden berücksichtigt werden, beispielsweise für die Anwendungsgebiete der Deutschen Industrienormen die Werte nach DIN 4703, nämlich für die Gleichungen (1.1) bis (1.4) die Werte In, Rn, Vn, Fi = 1, mi, und nach DIN 4701 An.

**4.** Verfahren nach Anspruch 1, dadurch gekennzeichnet, daß
für die Meßwerte A0, I0, R0, V0 sowohl Augenblickswerte als auch gleitende Mittelwerte für eine vorbestimmte oder an die Heizungsanlage angepaßte gleitende Zeitspanne berechnet werden,
sodaß zur Kontrolle des stationären Zustandes über die gleiche oder eine ähnliche Zeitspanne diese Mittelwerte für die Berechnung der Parameter nur verwendet werden, wenn sie vorbestimmte Grenzwerte abgestufter Größe nicht überschreiten, beispielsweise Vist-V < G für die Berechnung von F0 solange Fi benutzt wird und Vist-V < G/10 wenn vorhergehend F0 benutzt wurde, oder daß das Verhältnis von extremen Augenblickswerten zum Mittelwert einer Meßgröße während der gleitenden Zeitspanne vorbestimmte Grenzwerte nicht überschreiten, beispielsweise (Rmax-Rmin)/Rmittel < 0,02 für die Berechnung von s0, und daß bei den anderen Parametern und bei allen vier angewandten Meßgrößen in gleicher oder in ähnlicher Weise vorgegangen wird, und daß die Mittelwertbildung von s0 und (1-1/B0)/F0 nur mit Meßwerten innerhalb von Grenzwerten durchgeführt wird, welche bei hinreichend stationärem Verhalten eingehalten werden können, sowie während des stationären Zustandes bei Überschreitung von Vist-R > g*s0(I-A) mit I = W oder I = K und beispielsweise g>2 die Wärmezufuhr zum Heizkreis abgeschaltet wird bis sich wieder eine kleinere Spreizung Vist-R einstellt, wobei die Heizkreispumpe intermittierend betrieben wird.

**5.** Verfahren nach Anspruch 1 mit Berechnung der Raumlufttemperatur, dadurch gekennzeichnet,
daß durch Sollwertänderungen während des ersten Zeitintervalles, die innerhalb der Zeitspanne oder eines vorbestimmten Vielfachen dieser Zeitspanne für die Mittelwertbildung von (Vist) oder (R) vor dem Ende (S) des ersten Zeitintervalles stattfinden, wodurch ein stationärer Zustand nicht mehr zu erreichen ist, die Berechnung der Parameter für die Heizkennlinie nicht durchgeführt wird, wobei die Anwendung verschiedener Sollwerte während des ersten Zeitintervalles so zu behandeln ist, daß dem Sollwert, welcher vor dem Ende des ersten Zeitintervalles eingestellt ist, der Wert (W) zuzuordnen ist.

**6.** Verfahren nach Anspruch 1 oder 2, dadurch gekennzeichnet, daß beim Vorhandensein von zeitgesteuerten Heizkörperventilen, Zonenventilen und ähnlichen Steuereinrichtungen im Heizkreis an mindestens einem Wärmetauscher von Heizkreisen ohne Fühler für die Raumlufttemperatur die Abschaltung und die Einschaltung von Wärmetauschern während des Zwischenzeitintervalles vorzugsweise nach den Zeitpunkten te oder tq + (tq-t0) vorgenommen wird, abhängig davon, ob I0 oder IH-It und dM zu ermitteln sind, wogegen die Zuschaltung von Wärmetauschern während des Zwischenzeitintervalles so rechtzeitig vorgenommen wird, daß ihre Heizlast für die Berechnung der oberen Raumlufttemperatur Io für das nächstfolgende erste Zeitintervall einbezogen wird.

**7.** Verfahren nach Anspruch 2, dadurch gekennzeichnet, daß
bei Wärmeerzeugern mit nicht vernachlässigbarem Speicherinhalt des Wärmeträgers dieser Speicherinhalt kurz vor dem Einschaltzeitpunkt tS für die Schnellaufheizung auf seine maximale Temperatur gebracht wird.

**8.** Verfahren nach Anspruch 1 oder 2, dadurch gekennzeichnet,
daß die Verfahrensschritte zur Bestimmung der anzupassenden Parameter ausgeschaltet werden, sobald vorbestimmte Änderungen an den Einstellelementen oder vorbestimmte Störmeldungen auftreten, oder daß nur Zwischenzeitintervalle von vorbestimmter Mindestdauer und vorbestimmten Grenzen der Außentemperatur zur Parameteranpassung für die Heizkennlinie verwendet werden.

## Claims

**1.** A method of automatically self-adapting control of the temperature of at least one room in a building, in which for optimizing the energy consumption power for influencing the room temperature is fed to the room in question during predetermined first intervals of time through at least one heatexchanger in a heating circuit which exhibits a inlet of the heating and a return of the heating for a heat carrier flowing in it, in order to control the room temperature at a predetermined desired value where in the heating circuit the heating inlet temperature is guided in accordance with a heating characteristic in dependence upon the outside temperature,

whereas at the start of each intervening time interval which lies between every two first time intervals the power feed to the heating circuits is switched off and the room temperature drops until the power feed is switched on again in order to control the room temperature to the value of the supporting temperature,

characterized in

that the room temperature is calculated or measured and controlled according to its desired value according to the human sensitivity to heat as the sum of the weighted room air temperature (I) and the weighted wall temperature (M) of all of the wall surfaces next the room of the masses of the building inclusive of the surfaces of all of the articles of equipment storing heat in the rooms of the building heated by the heating circuit,

where the adaptation of at least one parameter of the HEATING characteristic is carried out through the evaluation of at least one of the sensed values of the inlet temperature (Vist) at the inlet to the heating circuit, the return temperature (R) at the outlet from the heating circuit, the outside temperature (A),

where, with the symbols clarified at the conclusion of the description and with the sign "*" as the multiplication symbol the following equations hold for the heating characteristic:

$$V = I + s0*(I-A)*F0/N \qquad (1.1)$$

with the abbreviation

$$N = 1 - B0^{-((I-A)/(In-AH))^{(1-1/mH)}} \qquad (1.2)$$

with the conditions $A <= I$ and $I-A <= In-An$

with desired values for the room air temperature:

I = W during the first time interval for the control of the normal temperature by predetermined W

I = K during the intervening time interval for the support of the wall temperature (M)

I = K and a transformed outside temperature Tr during the intervening time interval for the support of the room air temperature by predetermined K

I = ISt during the intervening time interval for the support of the wall temperature (M) at a value higher than K

I = IStb during the intervening time interval for the support of the wall temperature (M) at a value higher than K with the outside temperature decreasing

with further parameters for the Equations (1.1) and (1.2):

$$s0 = (V0-R0)/(IH-A0) \text{ with the substitute value } sn = (Vn-Rn)/(In-An) \qquad (1.3)$$

$$B0 = (V0-IH)/(R0-IH) \text{ with the substitute value } Bn = (Vn-In)/(Rn-In) \qquad (1.4)$$

$$F0 = (V0-IH)*N/(V0-R0) \qquad (1.5)$$

with I = IH and stationary behaviour of Vist-V, R, A,
as well as the substitute value Fi

$$IH = (I0 + V0-R0 + sH*A0)/(1 + sH) \qquad (1.6)$$

with the substitute values An for AH, mi for mH, sn for sH,

where A0, R0, V0 are the stationary values of the outside, return and inlet temperatures measured during the first time interval at an outside temperature $AH <= A < W$, where the substitute values for the parameters specified at the conclusion of the description are still used in the Equations (1.1) and (1.2) when measured or calculated values are not available for them, where the substitute values sn, Bn, mi are predetermined according to the building regulations for heating installations, the substitute value An represents the lowest outside temperature for the location of the building, the substitute value Fi for F0 depends upon the properties of the building,

where sH represents the mean value of at least two values of s0, which at average to low outside temperatures during the heating period and with strict tolerances for the stationary behaviour of Vist-V, R, A is formed from :

$$sH = (s01 + s02 + ... + s0p)/p \qquad (1.7)$$

where I0 is calculated as the mean value of the room air temperatures in all of the rooms in the building which are heated from the heating circuit, from the course of the return temperature (R) after the start of the intervening time interval,

where the average rise in the return temperature during the sampling period T1 as the time between two points of measurement of the return temperature, is calculated by Equation (2.1) and stored together with the measured values R(j*T1) and the points j*T1 in time, where:

$$dR(j*T1) = (R((j+1)*T1) - R(j*T1))/T1 \qquad (2.1)$$

with j = 0, 1, 2, ... and j*T1 = t - t0 and dR(j*T1) < 0

where expressions in brackets behind the symbols of dependent variables represent the value of the independent variables,

where t0 coincides with the end of the first time interval (S) or has from (S) a distance which occurs in such a way that the return temperature at the instant t0 is not higher than its instantanoeous value or sliding mean value at the instant (S), and the instant at which the minimum of dR(j*T1) occurs is designated by ta = t0 + a*T1, and the instant at which the condition:

$$dR(e*T1) > dR(a*T1)/2 \qquad (2.2)$$

is fulfilled is designated by te = t0 + e*T1 and with these measured values the time constant KR is calculated with which the return temperature approaches the room air temperature according to an exponential function:

$$KR = (te-ta)/(-ln(dR(te)/dR(ta))) \qquad (2.3)$$

and thereby the room air temperature at the same instants ta, te:

$$I(ta) = R(ta) + KR*dR(ta) \qquad (2.4)$$

$$I(te) = R(te) + KR*dR(te) \qquad (2.5)$$

and with the rise in the room air temperature at the instant ta:

$$dI(ta) = (I(te)-I(ta))/(te-ta) \qquad (2.6)$$

the room air temperature I0 at the instant t0 is calculated from

$$I0 = I(ta) + (t0-ta)*dI(ta) \qquad (2.7)$$

whereby the room air temperature IH, taking into consideration the heating load, is calculated according to Equation (1.6), B0 according to Equation (1.4), s0 according to Equation (1.3), and F0 according to Equation (1.5),

the adapted value mH is calculated according to the equation:

$$mH = mi + ((FH(b+c) - FH(b))*AF(b+c))/(2*(In-An)*F0'(b+c)) \qquad (3)$$

　　c = 1, 2, or higher, and 1 < mH < 2
or else F0(b+c) and A0 for FH(b+c) and AF(b+c)
where FH(b+c) is formed as the mean value of F0 at high outside temperatures and FH(b) at low outside temperatures, AF(b+c) is the mean value of the outside temperatures which were measured in the formation of FH(b+c), AF(b+c) is at least 10 ° C higher than the mean value AF(b), which is formed together with FH(b),

where the differentiation F0' with respect to mi follows the equation:

$$F0' = (-(V0 - IH) * (B0^{-Yi^{(1-1/mi)}}) * \ln(B0^{-Yi})) / (V0 - R0) / mi^2 \quad (4)$$

with Yi = (IH-A)/(In-An),
where mi is used as a substitute value for mH only until a first value of mH has been calculated,
the lowest adapted outside temperature AH is calculated from the equation:

AH = In - (VX-In)*(1-1/BH)/FH/sH    (5)

and is used in the equations for V, F0, F0' if AH > An, where the expression (1-1/BH)/FH is obtained according to Equation (12.4) as the mean value of a number of expressions (1-1/B0)/F0 with pairs of values of B0, F0 measured simultaneously at any time in the bottom range of outside temperature, where VX represents the maximum value of the inlet temperature (Vist) which is measured at the maximum power feed of at least one heating period, where the sliding mean value of (Vist) is calculated according to Equation (15),
that the supporting temperature (K) is controlled by the desired value of the inlet temperature (V) which is approximately the minimum possible and through taking into consideration the emission of heat from the walls enclosing the room in the building and from the articles of equipment which store heat in the rooms in the building, where the room air temperature I(j*T1) during the intervening time interval up to the instant t0 + KR and taking into consideration Equation (2.1), being calculated from:

I(j*T1) = R(j*T1) + KR*dR(j*T1) + IH - I0    (6.1)

with j = 0, 1, 2, ... and j*T1 = t - t0
after the instant t0 + KR up to the predetermined approximation q of the return temperature to the room air temperature is calculated with a longer sampling period T2 from:

I(j*T2) = R(j*T2) + KR*dR(j*T2) + IH - I0    (6.2)

with j = 0, 1, 2, ... and j*T2 = t - (t0 + KR)
the wall temperature (M) is calculated, where the heat carrier is still being moved compulsorily in the heating circuit, depending upon the admissible tolerance q for the determination of the room air temperature at the instant tq, in accordance with definition

q = (R(tq) + IH-I0 - I(tq))/R(tq)

or with measured values
q = -KR*dR(tq)/R(tq) with 0 < q < 0,1
where after the instant tq = t0 - KR*ln(q) the measured return temperature (R) in the heating circuit is equated to the mean value of the room air temperatures (I) in all of the rooms in the building trough the heat-exchangers in which the heat carrier of the heating circuit flows:

R(t-tq) = I(t-tq)    (6.3)

the wall temperature (M) after the instant tq runs at a higher instantaneous value than the room air temperature and the same rise dM as the room air temperature:

dM(tq) = (R(tq + n*KR) - R(tq))/(n*KR)    (6.4)

with 1 <= n <= (tq-t0)/KR, dM < 0 and A < K and not rising, n depending upon the time available and the trend of the outside temperature,
where for the value It, as the secant extrapolated to the instant t0, to the return temperature at the instant tq with rise according to Equation (6.4), the equation:

$$It = R(tq) - (tq-t0)^*dM(tq) \qquad (6.5)$$

holds, whereby the wall temperature (M) at the instant t0 is determined from

$$M(t0) = (IH + It)/2, \qquad (6.6)$$

the rate of rise of the wall temperature dM as also the rate of rise of the return temperature (R) and of the room air temperature (I) after the instant tq follows with a longer sampling period T3 the equation:

$$dM(j^*T3) = (R(j^*T3) - R((j-1)^*T3))/T3 \qquad (6.7)$$

with j = 1, 2, 3,... and tq + T3 < = j*T3 < (tStr or tSt or tS),
by the difference between the return temperature (R) and the outside temperature (A) at the corresponding instants, inclusive of the rate of rise and the time zone according to Equation (6.4), the time constant

$$KG(j^*T3) = (R(j^*T3) - A(j^*T3)/2 - A((j-1)^*T3)/2)/dM(j^*T3) \qquad (6.8)$$

is calculated approximately, which for the temperature ranges AF(b) and in the case of longer lowering times also for time ranges of, for example 10*T3, are stored, where at known sliding mean values of the return temperature (R) and outside temperature (A) are calculated the substitute values of the rise in the wall temperature and in the room air temperature:

$$dM(t) = (R(t) - A(t))/KG(t) \qquad (6.9)$$

in order thereby with the heating circuit pump switched off to calculate the room air temperature (I) by extrapolation,
the trend of the wall temperature (M) is determined by

$$M(t) = IH - (IH-It)/2 + (t-t0)^*dM(tq) \text{ for } t0...tq \qquad (7.1)$$

$$M(t) = R + (IH-It)/2 \text{ for } tq...tS \text{ or } tq...tSt \text{ or } tq...tStr, \qquad (7.2)$$

the wall temperature during the support of the room air temperature according to equation (7.7) until reaching the stationary wall temperature (M) with dM<0 and A<K follows the Equations (7.3), (6.4), (6.7):

$$M(t) = R(tStr) + (IH-It)/2 + (t-tStr)^*dM(tStr) \text{ for } tStr...tStr + ti \qquad (7.3)$$

with ti = (IH-It)/dM(tStr)  (7.4)

$$dM(tStr) = dM(tq) \text{ for } t0...tq + (tq-t0) \qquad (7.5)$$

$$dM(tStr) = dM(j^*T3) \text{ for } tq + T3 < = j^*T3 < tStr \qquad (7.6)$$

where the desired value of the inlet temperature is calculated in accordance with Equations (1.1), (1.2), in which case instead of the outside temperature (A) the transformed outside temperature Tr is used with ti according to Equation (7.4),

$$Tr = K - (K-A)^*(t-tStr)/ti \text{ for } t = tStr...tStr + ti \qquad (7.7)$$
$$Tr = A \text{ for } t > tStr + ti$$

or that the supporting temperature is controlled by a desired value higher than K, by the inlet temperature Vo being calculated periodically during the intervening time interval with the calculated wall temperature (M), where the cosiness temperature IB is determined by the equation:

$$IB = W - (IH - It)/4 \qquad (8.1)$$

of the next first time intervall, and the necessary upper room air temperature Io is determined by the equation:

Io = 2*IB - M(t)     (8.2)

the inlet temperature calculated periodically in the period t0...tS

Vo = Io + sH*(Io-A)*FH/N     (8.3)

with

$$N = 1 - BH^{-((Io-A)/(In-AH))^{(1-1/mH)}} \qquad (8.4)$$

alternatively B0 for BH, F0 for FH, s0 for sH, An for AH, mi for mH,
is compared with the maximum available inlet temperature VX, the instant tSt for the start of the support occuring when the inlet temperature Vo becomes Vo > = VX, whereupon at the same time Io-(tSt), M(tSt), A(tSt), are stored in order to support the wall temperature (M) at its minimum admissible value M(tSt) with the desired value of the room air temperature:

ISt = M(tSt) + (IH-It)/2     (8.5)

and the inlet temperature according to Equations (1.1), (1.2) with I=ISt as long as the outside temperature does not drop below the value A(tSt),
whereas in the case of the outside temperature dropping below the value A(tSt) the value of the periodically calculated upper room air temperature Io also drops and the difference
dIo = Io(tSt) - Io is calculated if necessary iteratively and thereby the followed-up corrected desired value:

IStb = ISt + dIo     (8.6)

is introduced into the equation for the inlet temperature.

2.  A method of automatically self-adapting control of the temperature of at least one room in a building, in which for optimizing the energy consumption power for influencing the room temperature is fed to the room in question during predetermined first intervals of time through at least one heatexchanger in a heating circuit which exhibits a inlet of the heating and a return of the heating for a heat carrier flowing in it, in order to control the room temperature at a predetermined desired value where in the heating circuit the heating inlet temperature is guided in accordance with a heating characteristic in dependence upon the outside temperature,
or with lowered room temperature the power feed to the heating circuit is switched on so promptly to rapid heating that the normal temperature is reached in the nearly shortest time approximately at the end of the intervening time interval, for doing which for calculation of the necessary instant to switch on, a characteristic is utilized,
characterized in
that the room temperature is calculated or measured and controlled according to its desired value according to the human sensitivity to heat as the sum of the weighted room air temperature (I) and the weighted wall temperature (M) of all of the wall surfaces next the room of the masses of the building inclusive of the surfaces of all of the articles of equipment storing heat in the rooms of the building heated by the heating circuit,
where the adaptation of at least one parameter of the RAPID-HEATING characteristic is carried out through the evaluation of at least one of the sensed values of the inlet temperature (Vist) at the inlet to the heating circuit, the return temperature (R) at the outlet from the heating circuit, the outside temperature (A),
where, with the symbols clarified at the conclusion of the description and with the sign "*" as the multiplication symbol hold for the following equations,
where with the trend of the wall temperature (M)

31

$$M(t) = IH - (IH-It)/2 + (t-t0)*dM(tq) \text{ for } t0...tq \qquad (7.1)$$

$$M(t) = R + (IH-It)/2 \text{ for } tq...tS \text{ or } tq...tSt \text{ or } tq...tStr, \qquad (7.2)$$

$$\text{with } dM(tq) = (R(tq+n*KR) - R(tq))/(n*KR) \qquad (6.4)$$

$$1 <= n <= (tq-t0)/KR, dM < 0 \text{ and } A < K \text{ and not rising,}$$

$$KR = (te-ta)/(-ln(dR(te)/dR(ta))) \qquad (2.3)$$

$$dR(j*T1) = (R((j+1)*T1) - R(j*T1))/T1 \qquad (2.1)$$

$$M(t) = R(tStr) + (IH-It)/2 + (t-tStr)*dM(tStr) \text{ for } tStr...tStr+ti \qquad (7.3)$$

$$\text{with } dM < 0 \text{ and } A < K, ti = (IH-It)/dM(tStr) \qquad (7.4)$$

$$dM(tStr) = dM(tq) \text{ for } t0...tq+(tq-t0) \qquad (7.5)$$

$$dM(tStr) = dM(j*T3) \text{ for } tq+T3 <= j*T3 < tStr \qquad (7.6)$$

$$\text{with } dM(j*T3) = (R(j*T3) - R((j-1)*T3))/T3 \qquad (6.7)$$

$$j = 1, 2, 3,... \text{ and } tq+T3 <= j*T3 < (tStr \text{ or } tSt \text{ or } tS),$$
the cosiness temperature IB:

$$IB = W - (IH - It)/4 \qquad (8.1)$$

of the next first time intervall for the necessary upper room air temperature Io is approximately determined by the equation:

$$Io = 2*IB - M(t) \qquad (8.2)$$

that the instant of switching on is calculated for the rapid heating from a rapid-heating characteristic formed from the trend of the return temperature, where the instant of switching off is reached if the return temperature during the rapid heating reaches or exceeds the stationary value of the return temperature of the next first time interval,
where the rapid heating characteristic consists of at least one of the sections of duration tD, tL, tE, the sum of which is set to zero if $tL = tE = 0$, the sum of which during the intervening time interval is continually compared with the difference in time between the instant (C) of the start of the next first time interval and the real time (t), so that the instant for the start of the rapid heating is determined by the condition:

$$tD + tL + tE >= C - t \qquad (8.7)$$

where after the instant tS in the period tE the return temperature rises approximately exponentially towards its maximum value:

$$RX = VX - sH*(Io - A), \qquad (8.8)$$

alternatively with sn for sH,
until it has reached the as-a-rule-lower stationary value RE of the next first time interval, where the lower room air temperature (Iu) at the instant tS of switching on the rapid heating and the possible increase IL in the room air temperature during the period tL are collated in the following table (8.9),

```
                                   Table                              (8.9)
Room air temperature                           Period for t

Iu(j*T1) = R(j*T1) + KR*dR(j*T1) + IH-I0       for t0...t0+KR
Iu(j*T2) = R(j*T2) + KR*dR(j*T2) + IH-I0       for t0+KR...tq
IL = IH - Iu                                   for t0...tq
Iu = R                         for tq...tS or tq...tSt or tq...tStr
IL = IH - It                   for tq...tS or tq...tSt or tq...tStr
Iu = I(tSt) + (IH-It)*(t-tSt)/tw               for tSt...tSt+tw
IL = (IH-It)*(tw+tSt-t)/tw                      for tSt...tSt+tw
Iu = I(tStr)                                   for tStr...tStr+ti
IL = (IH-It)*(ti+tStr-t)/ti                     for tStr...tStr+ti
Iu.= I(tSt) + IH-It                            for tSt+tw...tS
IL = 0                                         for tSt+tw...tS
Iu = I(tStr)                                   for tStr+ti...tS
IL = 0                                         for tStr+ti...tS
```

where with the values Iu, IL in the table dependent upon the time t-t0, or after the start of one of the supports dependent upon t-tSt or t-tStr, the return temperature RL adapts approximately the maximum value RLX:

RLX = Iu + IL + (FH/N-1)*sH*(Iu + IL-A)      (9.1)

with

$$N = 1 - BH^{-((Iu+IL-A)/(In-AH))^{(1-1/mH)}} \qquad (9.2)$$

Iu + IL = Io for Iu + IL > = Io

alternatively B0 for BH, F0 for FH, s0 for sH, An for AH, mi for mH,

the periodically calculated time for the linear rise of the return temperature with RL as the lowest of the three values RX, RE, RLX approximately follows Equation (9.3):

tL = (RL - Ru)/dRL      (9.3)

with tL = 0 for RL <= Ru,
Ru = R(tS) as the value of the return temperature at the start of the rapid heating,
where for dRL first of all the substitute value is used, than the mean value of measured difference quotients for the return temperature, which have been obtained during an adequately long rapid heating without previous support,

dRL = (dRL(k) + dRL(k + 1) + ... + dRL(k + p))/(p + 1)      (9.4)

k = 0, 1, 2, ... and k*T4 = t - (tS + tD)
with dRL(k) = (RL((k + 1)*T4) - RL(k*T4))/T4
and the association of the first sampling value dRL(k) > 0 with the instant tS + tD,

where in the duration tE the return temperature is calculated for the desired value Io of the next first time interval from:

RE = Io + (FH/N-1)*sH*(Io-A)     (9.5)

with

$$N = 1 - BH^{-((Io-A)/(In-AH))^{(1-1/mH)}} \qquad (9.6)$$

alternatively B0 for BH, F0 for FH, s0 for sH, An for AH, mi for mH,
where in Equations (9.5), (9.6) the value for the outside temperature A < = A(ts) is preserved with rising outside temperature until RE is reached, where the duration tE is calculated according to Equation (9.7):

tE = KS*ln(1 - (RE-RLX)/(RX-RLX))     (9.7)

tE = 0 for RE < = RLX, RX < = RLX
with RLX = Ru after the instant tSt + tw or tStr + ti, RLX < RE < RX,
where KS represent the time constant for the trend of the return temperature approximated by an exponential function, the return temperature Rm = (RX-Ru)/2, or in the case of previous switching-off of the rapid heating at a lower value of the return temperature Rm < RE, together with the instant tm at which Rm was reached, is measured and KS calculated from it:

KS = (tm - (tS + tD))/(-ln((RX-Rm)/(RX-Ru)))     (9.8)

where alternatively to Equation (9.4) the values of RL-Ru are improved by measurement technology, in that the difference measurements dRL(k) are continued in the time zone of tE, and at every value k the real time and the value of the return temperature are stored, and at every even number of values of dRL(k) the difference is formed from the following mean values:

(dRL(1) + ... + dRL(p/2))/(p/2) - (dRL(p/2 + 1) + ... + dRL(p))/(p/2)     (9.9)

and at the point p/2, at which a maximum or a constant difference which is greater than the initial differences occurs, the return temperature is used in the relationship:

dRL = (R(p/2) - Ru)/(T4*p/2),

or that the adaptation of at least one parameter of the SWITCHING-ON TEMPERATURE characteristic is carried out, which is represented by the following two equations with abbreviations inserted:

Te = Tn - (0,5*(TLE + TWE) - Tn)*(exp(p1*(t2-t)) - 1) - 0,5*(TLE-TWE) + 0,5*(TLE-TWE)*exp(-p2*(t2-tb))-     (10.1)

Te = Tn - (0,5*(TLE + TWE) - Tn)*(exp(p1*(t2-t)) - 1) - 0,5*(TLE-TWE)*exp(-p2*(t-tb)) + 0,5*(TLE-TWE)-*exp(-p2*(t2-tb))     (10.2)

the desired value Tn is predetermined, the maximum room air temperature TLE has to be measured or equated with the calculated room air temperature Io according to

Vo = Io + sH*(Io-A)*FH/N     (8.3)

with

$$N = 1 - BH^{-((Io-A)/(In-AH))^{(1-1/mH)}} \qquad (8.4)$$

34

and $Vo \geqq VX$

alternatively B0 for BH, F0 for FH, s0 for sH, An for AH, mi for mH,

the maximum wall temperature TWE is obtained from the trend of the room air temperature during the rapid heating, in doing which the room air temperature after the start of the rapid heating at the instant tS is sensed with the sampling period T5 and the difference quotients:

$$dTL(j*T5) = (TL((j+1)*T5) - TL(j*T5))/T5 \qquad (10.3)$$

are calculated with $j = 0, 1, 2, ...$ and $j*T5 = t\text{-}tS$

and stored together with the sensed room air temperature TL(j*T5) and the instant $tS + j*T5$, with the maximum value dTLX of the rate of rise of the room air temperature and the abbreviations

$h = dTLX - dTL(j*T5)$ and $f = (dTL((j+4)*T5) - dTL(j*T5))/4$ the ratio $z = f/(h+4*f)$ is calculated and as soon as Z enters the range $0,02 < Z < 0,06$ the instant tz and the value of z are stored and thereby

$$p2 = (lnz)/(tz\text{-}tS) \qquad (10.4)$$

is calculated, in doing which the value dTLX is associated approximately with the instant tS,

with the difference quotient:

$$dTL(j*T6) = (TL((j+1)*T6) - TL(j*T6))/T6$$

with $j = 0, 1, 2, ...$ and $j*T6 = t - (tz+4*T5)$

for the longterm rise in the room air temperature the difference TLE-TWE is calculated according to Equation (10.5):

$$TL(tz) - TL(tS) - (tz\text{-}tS)*dTL(j*T6) = TLE - TWE \qquad (10.5)$$

and the instants are $tz = t4$ and $tS = t10$,

with the rate of rise of the longterm transient process of the room air temperature, which is determined by the wall temperature (M), the room air temperature is measured with the sampling period T6 and the reciprocal time constant p1 is calculated as:

$$p1 = (TL((j+1)*T6) - TL(j*T6))/(TLE - TL(tz+4*T5))/T6 \qquad (10.6)$$

with $j = 0, 1, 2, ...$ and $j*T6 = t - (tz+4*T5)$

or else similarly to Equation (9.8):

$$p1 = (\text{-}ln((TLE - TLm)/(TLE - TL(tz+4*T5))))/(tm - (tz+4*T5)) \qquad (10.7)$$

tm and TLm being measured simultaneously with TLm approximately in the centre between TL-(tz+4*T5) and TLE.

3. A method as in Claim 1 or 2, characterised in that as starting values or as substitut values for the calculation of the parameters of the heating characteristic, B0, F0, s0, mH, AH, the values are used which because of standards or regulations are taken into consideration in the construction of heating installations and buildings, for example, for the fields of application of the German Industrial Standards the values according to DIN 4703, namely, for Equations (1.1) to (1.4) the values In, Rn, Vn, Fi = 1, mi and according to DIN 4701 the value An.

4. A method as in Claim 1, characterised in that for the measured values A0, I0, R0, V0 both instantaneous values and sliding mean values for a predetermined sliding period of time or one adapted to the heating installation are calculated so that for the control of the stationary state over the same or a similar period of time these mean values are employed for the calculation of the parameters only when they do not exceed predetermined limiting values of gratuated magnitude, for example, Vist-V < G for the calculation of F0 as long as Fi is used and Vist-V < G/10 if F0 was being used previously, or that the ratio of extreme instantaneous values to the mean value of a measured variable during the sliding period of time does not exceed predetermined limiting values, for example, (Rmax-Rmin)/Rmean < 0.02 for the calculation of s0, and that in the case of the other parameters and in the case of all four applied measured variables one proceeds in the same or a similar way, and that the formation of mean values of s0 and (1-1/B0)/F0 only with measured values within limiting values which can be maintained in the case of adequately stationary behaviour, as well as during the stationary state in the case of Vist-R exceeding g*s0(I-A) with I = W or I = K and, for example, g > 2 the feed of heat to the heating circuit is switched off until a narrower spread of Vist-R occurs again, in which case the heating circuit pump is operated intermittently.

5. A method as in Claim 1 with calculation of the room air temperature, characterised in that through alterations of desired values during the first time interval, which take place within the period of time or a predetermined multiple of this period of time for the formation of the mean value of (Vist) or (R) before the end (S) of the first time interval, whereby a stationary state can not longer be achieved, the calculation of the parameters for the heating caracteristic is not performed, in which case the application of different desired values during the first time interval has to be so treated that the value (W) has to be associated with the desired value which is set before the end of the first time interval.

6. A method as in Claim 1 or 2, characterised in that in the case of the existence of time-controlled radiator valves, zone valves and similar control devices in the heating circuit of at least one heatexchanger of heating circuits without sensors for the room air temperature the switching of heatexchangers off and on during the intervening time interval is preferably performed after the instants te or tq + (tq-t0), depending upon whether I0 or IH-It and dM are to be determined, whereas the switching-on of heatexchangers during the intervening time interval is advantageously performed at the correct time so that their heat load is included for the calculation of the upper room air temperature Io for the next first time interval.

7. A method as in Claim 2, characterised in that in the case of heat sources having a storage content of the heat carrier which is not negligible, this storage content is brought shortly before the instant tS for switching on the rapid heating, up to its maximum temperature.

8. A method as in Claim 1 or 2, characterised in that the steps of the method for the determination of the parameters to be adapted are switched off as soon as predetermined alterations of the adjusting elements or predetermined disturbance reports occur, or that only intervening time intervals of predetermined minimum duration and predetermined limits to the outside temperature are employed for adaptation of the parameters for the heating characteristic.

**Revendications**

1. Méthode auto-adaptie pour la regulation de la température d'au moins une enceinte d'immeuble, selon lequel, pour optimiser la consommation en énergie pendant des premiers intervalles de temps prédéterminés, pour influencer la température ambiante on fournit de l'énergie ou volume concerné par au moins un échangeur de chaleur appartenant à un circuit de chauffage ayant une conduite d'entrée ét une conduite de retour d'un fluide caloporteur, afin de controler la température ambiante sur une valeur de consigne prédéterminée, la température d'alimentation du fluide caloporteur, dans le circuit de chauffage, étant conduite selon une caractéristique de chauffage en fonction de la température externe,

alors qu'au début de chaque intervalle intermédiaire de temps qui se situe respectivement entre chaque fois deux premiers intervalles de temps, on coupe l'alimentation en énergie du circuit de chauffage et on laisse la température ambiante diminuer jusqu'à ce que l'on ouvre de nouveau l'alimentation en énergie pour commander la température ambiante à la valeur de la température de support,

caractérisé en ce que

- on calcule ou mesure et on côntrole suivant sa valeur de consigne la température ambiante selon la perception calorifique humaine connue, la somme de la température de l'air ambiant (I) pondérée et de la température de paroi (M), pondérée, de toutes les surfaces des parois des masses de l'immeuble, du coté du volume de l'immeuble, y compris des surfaces de tous les objets d'installation accumulant de la chaleur dans les volumes de l'immeuble chauffé par le circuit de chauffage,

on adapte d'au moins un paramètre de la caractéristique de chauffage par l'exploitation d'au moins une des valeurs senties de la température d'entrée de chauffage (Vist) à l'entrée du circuit

36

de chauffage, de la température de retour de chauffage (R) à la sortie du circuit de chauffage, de la température extérieure (A),

en utilisant les symboles dont la signification est donnée à la fin de la description ainsi que le signe * comme symbole de multiplication, ce qui donne l'équation suivante pour la caractéristique de chauffage:

$$V = I + s0*(I-A)*F0/N \qquad (1.1)$$

en posant

$$N = 1 - B0^{-((I-A)/(In-AH))^{(1-1/mH)}} \qquad (1.2)$$

aux conditions A < = I et I-A < = In-An
avec des valeurs de consigne pour la température de l'air ambiant

I = W       pendant le premier intervalle de temps pour commander la température normale avec une valeur W prédéterminée,

I = K       pendant l'intervalle de temps intermédiaire pour soutenir la température de paroi (M),

I = K       et une température extérieure Tr transformée pendant l'intervalle de temps intermédiaire pour soutenir la température de l'air ambiant avec la valeur K prédéterminée,

I = ISt       pendant l'intervalle de temps intermédiaire pour soutenir la température de paroi (M) à une valeur supérieure à K,

I = IStb       pendant l'intervalle de temps intermédiaire pour soutenir la température de paroi (M) à une valeur supérieure à K avec une température extérieure décroissante,

avec d'autres paramètres pour les équations (1.1) et (1.2):

$$s0 = (V0-R0)/(IH-A0) \text{ avec la valeur de substitution } sn = (Vn-Rn)/(In-An) \qquad (1.3)$$

$$B0 = (V0-IH)/(R0-IH) \text{ avec la valeur de substitution } Bn = (Vn-In)/(Rn-In) \qquad (1.4)$$

$$F0 = (V0-IH)*N/(V0-R0) \qquad (1.5)$$

avec I = IH et le comportement stationaire de Vist-V, R, A, ainsi que la valeur de substitution Fi

$$IH = (I0 + V0-R0 + sH*A0)/(1 + sH) \qquad (1.6)$$

avec la valeur de substitution An pour AH, mi pour mH, sn pour sH,

où pendant le premier intervalle de temps pour une température extérieure AH < = A < W, les valeurs A0, R0, V0 correspondent aux grandeurs stationnaires, mesurées, de la température extérieure, de la température de retour et de la température d'entrée, les valeurs de substitution données à la fin de la description pour les paramètres sont toujours introduites dans les équations (1.1) et (1.2), lorsqu'on n'a pas encore les grandeurs de mesure ou de calcul, les valeurs de substitution sn, Bn, mi étant prédéterminées selon les prescriptions dans le domaine du bâtiment, s'appliquant à des installations de chauffage, la valeur de substitution An représentant la température extérieure la plus basse à l'endroit de l'immeuble, la valeur de substitution Fi pour F0 dépendant des caractéristiques de l'immeuble,

- sH représente la valeur moyenne d'au moins deux grandeurs de s0 qui, pour les températures extérieures moyennes jusqu'à basses, dans la période de chauffage et avec des tolérances étroites, sont formées pour le comportement stationnaire de Vist-V, R, A,

$$sH = (s01 + s02 + ... + s0p)/p \qquad (1.7)$$

I0 étant la valeur moyenne des températures de l'air ambiant de tous les volumes de l'immeuble chauffé par le circuit de chauffage, le calcul s'effectue à partir du profil de la température de retour (R) après le début de l'intervalle de temps intermédiaire,

la pente moyenne de la température de retour pendant la période d'échantionnage T1 étant calculée comme temps compris entre deux points de mesure de la température de retour avant l'équation (2.1) pour être inscrite avec les grandeurs de mesure R(j*T1) et aux instants j*T1,

$$dR(j^*T1) = (R((j+1)^*T1) - R(j^*T1))/T1 \qquad (2.1)$$

avec j = 0, 1, 2, ... et j*T1 = t - t0 et dR(j*T1) < 0

- les expressions entre parenthèses derrière les symboles des variables dépendantes représentent la valeur des variables indépendantes,
- t0 coïncide avec (S) ou se trouve à une certaine distance de celui-ci à la fin du premier intervalle de temps (S), distance qui est telle que la température de retour à l'instant t0 ne soit pas supérieure à sa valeur instantanée ou à la valeur moyenne mobile à l'instant (S) et qu'à l'instant auquel se présente le minimum de dR(j*T1) est désigné par ta = t0 + a*T1 et que l'instant auquel la condition

$$dR(e^*T1) > dR(a^*T1)/2 \qquad (2.2)$$

est satisfaite, avec te = t0 + e*T1 et avec ces grandeurs de mesure on calcule la constante de temps KR par laquelle on calcule la température de retour selon une fonction exponentielle qui approche vers la température ambiante

$$KR = (te-ta)/(-\ln(dR(te)/dR(ta))) \qquad (2.3)$$

et ainsi la température de l'air ambiant aux mêmes instants ta, te

$$I(ta) = R(ta) + KR^*dR(ta) \qquad (2.4)$$

$$I(te) = R(te) + KR^*dR(te) \qquad (2.5)$$

et avec la pente de la température de l'air ambiant à l'instant ta

$$dI(ta) = (I(te)-I(ta))/(te-ta) \qquad (2.6)$$

on calcule la température de l'air ambiant I0 à l'instant t0 et pour

$$I0 = I(ta) + (t0-ta)^*dI(ta) \qquad (2.7)$$

on calcule la température de l'air ambiant IH en tenant compte de la charge de chauffage selon l'équation (1.6), B0 selon l'équation (1.4), s0 suivant l'équation (1.3), F0 selon l'équation (1.5), or calcule la valeur adaptée mH selon l'équation

$$mH = mi + ((FH(b+c) - FH(b))^*AF(b+c))/(2^*(In-An)^*F0'(b+c)) \qquad (3)$$

     c = 1, 2, ou plus, et 1 < mH < 2
valeurs de substitution F0(b+c) et A0 pour FH(b+c) et AF(b+c)
relations dans lesquelles FH(b+c) est la valeur moyenne de F0 pour des températures extérieures élevées et FH(b) est formée aux températures extérieures les plus basses, AF(b+c) est la valeur moyenne des températures extérieures qui ont été mesurées pour former FH(b+c), AF-(b+c) étant au moins supérieur de 10°C à la valeur moyenne AF(b) qui est formée avec FH(b), la dérivation F0' avec mi se faisant suivant l'équation:

$$F0' = (-(V0-IH)^*(B0^{-Yi^{(1-1/mi)}})^*\ln(B0^{-Yi}))/(V0-R0)/mi^2 \qquad (4)$$

où Yi = (IH-A)/(In-An),
mi n'étant utilisé comme valeur de substitution de mH que jusqu'à ce qu'a été calculée une première valeur de mH,
la température extérieure adaptée, la plus basse AH se calculant selon l'équation:

$$AH = In - (VX-In)*(1-1/BH)/FH/sH \qquad (5)$$

pour être substituée dans les équations de V, F0, F0' si AH > An,
l'expression (1-1/BH)/FH étant prise comme valeur moyenne de plusieurs expressions (1-1/B0)/F0 avec chaque fois des paires des gradeurs de mesure pour B0, F0 selon l'équation (12.4), grandeurs mesurées simultanément chaque fois dans la zone inférieure des températures extérieures, VX représentant la valeur maximale de la température d'entrée (Vist) pour laquelle l'alimentation maximale en énergie est mesurée au moins d'une période de chauffage avec la valeur moyenne mobile de (Vist) selon équation (15),

- on contrôle la température de support (K) avec la valeur de consigne approximativement la plus minime possible de la température d'entrée (V) et en tenant compte de l'emmission de chaleur des parois entourant les volumes de l'immeuble ainsi que les objets de l'installation accumulant de la chaleur dans les volumes de l'immeuble, pendant l'intervalle de temps intermédiaire, jusqu'à l'instant t0 + KR, on calcule la température de l'air ambiant I(j*T1) en tenant compte de l'équation (2.1),

$$I(j*T1) = R(j*T1) + KR*dR(j*T1) + IH - I0 \qquad (6.1)$$

avec j = 0, 1, 2, ... et j*T1 = t - t0
après l'instant t0 + KR jusqu'à l'approximation prédéterminée q de la température de retour à la température de l'air ambiant, on calcule avec une période d'échantionnage plus longue T2

$$I(j*T2) = R(j*T2) + KR*dR(j*T2) + IH - I0 \qquad (6.2)$$

avec j = 0, 1, 2, ... et j*T2 = t - (t0 + KR)
on calcule la température de paroi (M), le fluide caloporteur du circuit de chauffage étant toujours entrainé de manière forcée et suivant la tolérance autorisée q pour déterminer la température de l'air ambiant à l'instant tq, on calcule selon la définition

$$q = (R(tq) + IH-I0 - I(tq))/R(tq)$$

ou avec les valeurs mesurées
q = -KR*dR(tq)/R(tq) avec 0 < q < 0,1
après l'instant tq = t0 - KR*ln(q) on égalise la température de retour (R) du circuit de chauffage et la valeur moyenne des températures de l'air ambiant (I) de tous les volumes de l'immeuble dont les échangeurs de chaleur sont traversés par le fluide caloporteur du circuit de chauffage,

$$R(t-tq) = I(t-tq) \qquad (6.3)$$

la température de paroi (M), après l'instant tq passe à une valeur instantanée plus élevée que la température de l'air ambiant avec la meme pente dM que la température de l'air ambiant,

$$dM(tq) = (R(tq + n*KR) - R(tq))/(n*KR) \qquad (6.4)$$

avec 1 <= n <= (tq-t0)/KR, dM < 0 et A < K et de manière non croissante, n suivant le temps disponible et le profil de la température extérieure, et pour la valeur It, comme séquente extrapolée à l'instant t0 pour la température de retour à l'instant tq en utilisant la pente selon l'équation (6.4), on utilise l'équation

$$It = R(tq) - (tq-t0)*dM(tq) \qquad (6.5)$$

la température de paroi (M) étant déterminée à l'instant t0 par la relation

$$M(t0) = (IH + It)/2, \qquad (6.6)$$

la pente de la température de paroi dM de même que la pente de la température de retour (R) et de la température de l'air ambiant (I) après l'instant suivant tq avec une période d'échantionnage plus longue T3 l'équation

$$dM(j*T3) = (R(j*T3) - R((j-1)*T3))/T3 \qquad (6.7)$$

avec j = 1, 2, 3,... et tq + T3 < = j*T3 < (tStr ou tSt ou tS),
avec la différence de la température de retour (R) et de la température extérieure (A) aux instants correpondants ainsi que la pente et la plage de temps selon l'équation (6.4), on calcule les constantes de temps par approximation,

$$KG(j*T3) = (R(j*T3) - A(j*T3)/2 - A((j-1)*T3)/2)/dM(j*T3) \qquad (6.8)$$

ces constantes étant mises en mémoire pour la plage de température AF(b) et pour des temps d'absence prolongée, également pour les plages intermédiaires, par exemple 10*T3, pour calculer ainsi pour les valeurs moyennes variables connues de la température de retour (R) et de la température extérieure (A), les valeurs de substitution de la pente de la température de paroi et de la température de l'air ambiant

$$dM(t) = (R(t) - A(t))/KG(t) \qquad (6.9)$$

pour que lorsque la pompe de circulation de chauffage est coupée, on puisse calculer par extrapolation la température de l'air ambiant (I),
- on détermine le tracé de la température de paroi (M) comme suit:

$$M(t) = IH - (IH-It)/2 + (t-t0)*dM(tq) \text{ pour } t0...tq \qquad (7.1)$$

$$M(t) = R + (IH-It)/2 \text{ pour } tq...tS \text{ ou } tq...tSt \text{ ou } tq...tStr, \qquad (7.2)$$

la température de paroi suit les équations (7.3), (6.4), (6.7) pendant le support de la température de l'air ambiant selon l'équation (7.7) jusqu'à ce que l'on atteigne la température stationnaire de paroi (M) avec dM<0 et A<K,

$$M(t) = R(tStr) + (IH-It)/2 + (t-tStr)*dM(tStr) \text{ pour } tStr...tStr + ti \qquad (7.3)$$

avec

$$ti = (IH-It)/dM(tStr) \qquad (7.4)$$

$$dM(tStr) = dM(tq) \text{ pour } t0...tq + (tq-t0) \qquad (7.5)$$

$$dM(tStr) = dM(j*T3) \text{ pour } tq + T3 < = j*T3 < tStr \qquad (7.6)$$

on calcule la valeur de consigne de la température d'entrée selon les équations (1.1), (1.2), en utilisant à la place de la température extérieure (A), la transformée de la température extérieure Tr par ti selon l'équation (7.4),

$$Tr = K - (K-A)*(t-tStr)/ti \text{ pour } t = tStr...tStr + ti \qquad (7.7)$$
$$Tr = A \text{ pour } t > tStr + ti$$

- ou en ce que la température de support est contrôlée à une valeur de consigne supérieure à K, en ce que pendant l'intervalle de temps intermédiaire, on calcule périodiquement la température d'entrée Vo avec la température de paroi (M), la température de bien-être IB comme

$$IB = W - (IH - It)/4 \qquad (8.1)$$

du premier intervalle de temps suivant, la température de l'air ambiant Io, supérieure, nécessaire,

40

étant définie par l'équation

$$Io = 2*IB - M(t) \qquad (8.2)$$

et la température d'entrée calculée périodiquement dans l'intervalle de temps t0...tS

$$Vo = Io + sH*(Io-A)*FH/N \qquad (8.3)$$

avec

$$N = 1 - BH^{-((Io-A)/(In-AH))^{(1-1/mH)}} \qquad (8.4)$$

en substituant B0 à BH, F0 à FH, s0 à sH, An à AH, mi à mH,
on compare avec la température d'entrée maximale disponible VX, l'instant tSt se produisant au début du support pour la température d'entrée Vo > = VX, en même temps, on met en mémoire Io(tSt), M(tSt), A(tSt), pour soutenir la température de paroi (M) avec

$$ISt = M(tSt) + (IH-It)/2 \qquad (8.5)$$

et les équations (1.1), (1.2) avec I = ISt à sa valeur minimale autorisée M(tSt) aussi longtemps que la température extérieure ne passe pas en dessous de la valeur A(tSt),
alors que la température extérieure chute en-dessous de la valeur A(tSt), on calcule également le cas échéant par itération, la valeur de la température supérieure de l'air ambiant est Io, calculée périodiquement, qui chute, ainsi que la différente dIo = Io(tSt) - Io, et ainsi la valeur de consigne asservie, corrigée

$$IStb = ISt + dIo \qquad (8.6)$$

on introduit dans l'équation de la température d'entrée.

2. Méthode auto-adaptie pour la regulation de la température d'au moins une enceinte d'immeuble, selon lequel, pour optimiser la consommation en énergie pendant des premiers intervalles de temps prédéterminés, pour influencer la température ambiante on fournit de l'énergie ou volume concerné par au moins un échangeur de chaleur appartenant à un circuit de chauffage ayant une conduite d'entrée et une conduite de retour d'un fluide caloporteur, afin de contrôler la température ambiante sur une valeur de consigne prédéterminée, la température d'alimentation du fluide caloporteur, dans le circuit de chauffage, étant conduite selon une caractéristique de chauffage en fonction de la température externe,
ou selon lequel avec l'abaissement de la température ambiante, on branche l'alimentation en énergie du circuit de chauffage suffisamment à temps sur le chauffage rapide pour que la température normale soit attainte, en un temps approximativement le plus court, environ à la fin de l'intervalle de temps intermédiaire, pour calculer le point de mise en oeuvre nécessaire, on utilise une caractéristique,
caractérisé en ce que
- on calcule ou mesure et on contrôle suivant sa valeur de consigne la température ambiante selon la perception calorifique humaine connue, la somme de la température de l'air ambiant (I) pondérée et de la température de paroi (M), pondérée, de toutes les surfaces des parois des masses de l'immeuble, du coté du volume de l'immeuble, y compris des surfaces de tous les objets d'installation accumulant de la chaleur dans les volumes de l'immeuble chauffé par le circuit de chauffage,
on adapte d'au moins un paramètre de la CARACTERISTIQUE de CHAUFFAGE RAPIDE par l'exploitation d'au moins une des valeurs senties de la température d'entrée de chauffage (Vist) à l'entrée du circuit de chauffage, de la température de retour de chauffage (R) à la sortie du circuit de chauffage, de la température extérieure (A),
en utilisant les symboles dont la signification est donnée à la fin de la description ainsi que le signe * comme symbole de multiplication, ce qui donne les équations suivantes,
à quoi avec le tracé de la température de paroi (M)

$$M(t) = IH - (IH-It)/2 + (t-t0)^*dM(tq) \text{ pour } t0...tq \qquad (7.1)$$

$$M(t) = R + (IH-It)/2 \text{ pour } tq...tS \text{ ou } tq...tSt \text{ ou } tq...tStr, \qquad (7.2)$$

avec

$$dM(tq) = (R(tq + n^*KR) - R(tq))/(n^*KR) \qquad (6.4)$$

$1 <= n <= (tq-t0)/KR$, $dM < 0$ et $A < K$ et de manière non croissante,

$$KR = (te-ta)/(-ln(dR(te)/dR(ta))) \qquad (2.3)$$

$$dR(j^*T1) = (R((j + 1)^*T1) - R(j^*T1))/T1 \qquad (2.1)$$

$$M(t) = R(tStr) + (IH-It)/2 + (t-tStr)^*dM(tStr) \text{ pour } tStr...tStr + ti \qquad (7.3)$$

avec

$dM < 0$ et $A < K$, $ti = (IH-It)/dM(tStr)$ $\qquad (7.4)$

$$dM(tStr) = dM(tq) \text{ pour } t0...tq + (tq-t0) \qquad (7.5)$$

$$dM(tStr) = dM(j^*T3) \text{ pour } tq + T3 <= j^*T3 < tStr \qquad (7.6)$$

avec

$$dM(j^*T3) = (R(j^*T3) - R((j-1)^*T3))/T3 \qquad (6.7)$$

$j = 1, 2, 3,...$ et $tq + T3 <= j^*T3 < (tStr \text{ ou } tSt \text{ ou } tS)$,
la température de bien-être IB comme

$$IB = W - (IH - It)/4 \qquad (8.1)$$

du premier intervalle de temps suivant, la température de l'air ambiant Io, supérieure, nécessaire, étant définie approximativement par l'équation

$$Io = 2^*IB - M(t), \qquad (8.2)$$

- on calcule le point de mise en oeuvre du chauffage rapide à l'aide d'une caractéristique de chauffage rapide formée à partir du tracé de la température de retour, en ce qu'on atteint le point de coupure, si la température de retour attaint ou dépasse la valeur stationnaire de la température de retour du premier intervalle de temps suivant,
à quoi la caractéristique de chauffage rapide se compose d'au moins un des segments de temps ayant pour durée tD, tL, tE dont la somme est nulle, si $tL = tE = 0$ alors que cette somme est comparée en continue pendant l'intervalle de temps intermédiaire à la différence de temps entre l'instant (C) du début du premier intervalle de temps suivant et du temps réel (t) si bien que l'instant du début du chauffage rapide est définie par la condition

$$tD + tL + tE >= C - t \qquad (8.7)$$

la température de retour après l'instant de mise en oeuvre tS augmente dans l'intervalle de temps tE, de façon pratiquement exponentielle, vers sa valeur maximale

$$RX = VX - sH^*(Io - A), \qquad (8.8)$$

en substituant sn à sH,

jusqu'à ce qu'elle atteigne la valeur RE du premier intervalle de temps suivant (valeur stationnaire qui est en général plus basse que RX),

la température inférieure de l'air ambiant (Iu) pour le point de mise en oeuvre tS du chauffage rapide et l'augmentation possible IL de la température de l'air ambiant pendant l'intervalle de temps tL sont réunis dans le tableau suivant (8.9),

```
                    TABLEAU                           (8.9)

température de l'air ambiant              Segment de temps


Iu(j*T1) = R(j*T1) + KR*dR(j*T1) + IH-I0      pour t0...t0+KR
Iu(j*T2) = R(j*T2) + KR*dR(j*T2) + IH-I0      pour t0+KR...tq
IL = IH - Iu                                  pour t0...tq



Iu = R                      pour tq...tS ou tq...tSt ou tq...tStr
IL = IH - It                pour tq...tS ou tq...tSt ou tq...tStr
Iu = I(tSt) + (IH-It)*(t-tSt)/tw        pour tSt...tSt+tw
IL = (IH-It)*(tw+tSt-t)/tw              pour tSt...tSt+tw
Iu = I(tStr)                           pour tStr...tStr+ti
IL = (IH-It)*(ti+tStr-t)/ti            pour tStr...tStr+ti
Iu = I(tSt) + IH-It                    pour tSt+tw...tS
IL = 0                                 pour tSt+tw...tS
Iu = I(tStr)                           pour tStr+ti...tS
IL = 0                                 pour tStr+ti...tS
```

à quoi pour les valeurs du tableau Iu, IL en fonction temps t-t0, ou après le début de l'un des supports dépendant de temps t-tSt ou t-tStr, la température de retour RL prend moins approximativement la valeur maximale RLX

RLX = Iu + IL + (FH/N-1)*sH*(Iu + IL-A)     (9.1)

avec

$$N = 1 - BH^{-((Iu+IL-A)/(In-AH))^{(1-1/mH)}} \qquad (9.2)$$

Iu + IL = Io pour Iu + IL > = Io

en substituant B0 à BH, F0 à FH, s0 à sH, An à AH, mi à mH,
le temps calculé périodiquement pour la croissance linéaire de la température de retour se fait avec RL comme correspondant à la plus petite des trois valeurs RX, RE, RLX approximativement selon l'équation (9.3):

tL = (RL - Ru)/dRL     (9.3)

avec tL = 0 pour RL < = Ru,
Ru = R(tS) comme valeur de la température de retour au début du chauffage rapide,

en utilisant pour dRL tout d'abord la valeur de substitution, puis la valeur moyenne des quotients de différence, mesurés, de la température de retour, qui ont été obtenus pendant un chauffage rapide suffisamment long sans support préalable,

$$dRL = (dRL(k) + dRL(k+1) + ... + dRL(k+p))/(p+1) \qquad (9.4)$$

$k = 0, 1, 2, ...$ et $k*T4 = t - (tS + tD)$
avec $dRL(k) = (RL((k+1)*T4) - RL(k*T4))/T4$
et l'association de la première valeur de d'échantionnage $dRL(k) > 0$ à l'instant $tS + tD$,
à quoi au cours de l'intervalle tE on calcule la température de retour pour la valeur de consigne Io du premier intervalle de temps suivant:

$$RE = Io + (FH/N-1)*sH*(Io-A) \qquad (9.5)$$

avec

$$N = 1 - BH^{-((Io-A)/(In-AH))^{(1-1/mH)}} \qquad (9.6)$$

en substituant B0 à BH, F0 à FH, s0 à sH, An à AH, mi à mH,
dans l'équation (9.5), (9.6) on conserve la valeur de la température extérieure $A <= A(tS)$ pour une température extérieure croissante, jusqu'à ce que l'on ait atteint RE, on calcule la durée tE:

$$tE = KS*ln(1 - (RE-RLX)/(RX-RLX)) \qquad (9.7)$$

$tE = 0$ pour $RE <= RLX$, $RX <= RLX$
avec $RLX = Ru$ après l'instant $tSt + tw$ ou $tStr + ti$,
    $RLX < RE < RX$,
KS représentant la constante de temps pour le profil de la température de retour représentée approximativement par une fonction exponentielle, la température de retour $Rm = (RX-Ru)/2$, ou en cas de coupure anticipée du chauffage rapide pour une valeur faible de la température de retour $Rm<RE$, avec un instant tm auquel a été mesuré Rm et à partir duquel on calcule KS:

$$KS = (tm - (tS + tD))/(-ln((RX-Rm)/(RX-Ru))) \qquad (9.8)$$

à quoi au lieu de l'équation (9.4) on améliore la métrologie de RL-Ru, en ce qu'on poursuit dans l'intervalle de temps tE, les mesures de différence dRL(k) et pour chaque valeur k on met en mémoire le temps réel et la valeur de la température de retour, et pour chaque nombre d'ordre pair, des valeurs dRL(k) on forme la différence à partir des valeurs moyennes suivantes:

$$(dRL(1) + ... + dRL(p/2))/(p/2) - (dRL(p/2+1) + ... + dRL(p))/(p/2) \qquad (9.9)$$

et à la place de p/2 pour laquelle on rencontre une différence du maximum ou une différence constante qui est supérieure aux différences initiales, on substitue la température de retour dans la relation

$$dRL = (R(p/2) - Ru)/(T4*p/2),$$

ou on adapte d'au moins un des paramètres de la CARACTÉRISTIQUE DE TEMPÉRATURE DE MISE EN OEUVRE étant représentée par le deux équations suivantes avec les abréviations:

$$Te = Tn - (0,5*(TLE+TWE) - Tn)*(exp(p1*(t2-t)) - 1) - 0,5*(TLE-TWE) + 0,5*(TLE-TWE)*exp(-p2*(t2-tb)) \qquad (10.1)$$

$$Te = Tn - (0,5*(TLE+TWE) - Tn)*(exp(p1*(t2-t)) - 1) - 0,5*(TLE-TWE)*exp(-p2*(t-tb)) + 0,5*(TLE-TWE)*exp(-p2*(t2-tb)) \qquad (10.2)$$

- on prédétermine la valeur de consigne Tn, la température de l'air ambiant maximale TLE, qu'il faut mesurer ou équilibrer avec la température de l'air ambiant Io:

$$Vo = Io + sH^*(Io-A)^*FH/N \qquad (8.3)$$

avec

$$N = 1 - BH^{-((Io-A)/(In-AH))^{(1-1/mH)}} \qquad (8.4)$$

et Vo ≥ VX
en substituant B0 à BH, F0 à FH, s0 à sH, An à AH, mi à mH,
la température de paroi maximale TWE à partir du tracé de la température de l'air ambiant pendant le chauffage rapide, la température de l'air ambiant étant échantionnée après le début du chauffage rapide à l'instant tS selon la période d'échantionnage T5, on calcule les quotients de différence:

$$dTL(j^*T5) = (TL((j+1)^*T5) - TL(j^*T5))/T5 \qquad (10.3)$$

avec j = 0, 1, 2, ... et j*T5 = t-tS
et on les met en mémoire avec la température de l'air ambiant, échantionnée TL(j*T5) et à l'instant tS + j*T5, on calcule périodiquement avec la valeur maximale dTLX la pente de la température de l'air ambiant et les abréviations
h = dTLX - dTL(j*T5) et f = (dTL((j+4)*T5) - dTL(j*T5))/4
pour donner le rapport z = f/(h+4*f) et dès que Z passe dans la plage 0,02 < Z < 0,06, on met en mémoire l'instant tz et la valeur de z, et on calcule

$$p2 = (lnz)/(tz-tS) \qquad (10.4)$$

en associant approximativement la valeur dTLX à l'instant tS,
en utilisant pour le calcul de la différence TLE-TWE selon l'équation (10.5) avec les quotients de différence:

$$dTL(j^*T6) = (TL((j+1)^*T6) - TL(j^*T6))/T6$$

avec j = 0, 1, 2, ... et j*T6 = t - (tz + 4*T5)
pour la montée à long terme de la température ambiante:

$$TL(tz) - TL(tS) - (tz-tS)^*dTL(j^*T6) = TLE - TWE \qquad (10.5)$$

et les instants tz = t4 et tS = t10,
avec la pente de la phase de transition à long terme de la température de l'air ambiant qui est déterminée par la température de paroi (M) mesuré à la période d'échantionnage T6 et on calcule la réciproque de la constante de temps p1:

$$p1 = (TL((j+1)^*T6) - TL(j^*T6))/(TLE - TL(tz+4^*T5))/T6 \qquad (10.6)$$

avec j = 0, 1, 2, ... et j*T6 = t - (tz + 4*T5)
ou encore de façon analogue à l'équation (9.8):

$$p1 = (-ln((TLE - TLm)/(TLE - TL(tz+4^*T5))))/(tm - (tz+4^*T5)) \qquad (10.7)$$

en mesurant simultanément tm et TLm en plaçant TLm environ au milieu de TL(tz + 4*T5) et TLE.

3. Méthode selon la revendication 1 ou 2, charactérisé en ce que comme valeur initiale ou grandeur de substitution pour calculer les paramètres des caractèristiques de chauffage B0, F0, s0, mH, AH, on

EP 0 308 806 B1

utilise les valeurs prises en compte à partir des normes ou prescriptions pour la construction d'installations de chauffage d'immeubles, par exemple pour les domaines d'application des normes de l'industrie allemande, on a des valeurs selon DIN 4703 à savoir pour les equations (1.1) jusqu'à (1.4) on a les valeurs In, Rn, Vn, Fi = 1, mi et selon DIN 4701 An.

**4.** Méthode selon la revendication 1, charactérisé en ce que pour les grandeurs de mesure A0, I0, R0, V0 on utilise à la fois les valeurs instantanées et aussi des valeurs moyennes variables pour l'intervalle de temps prédéterminé ou variable, adapté à l'installation de chauffage pour que le côntrole de l'état stationnaire, on puisse utiliser pour les intervalles de temps identiques ou analogues, les valeurs moyennes pour le calcul des paramètres seulement si elles ne dépassent les grandeurs limites prédéterminées, échelonnées comme par exemple les Vist-V < G pour le calcul de F0 aussi longtemps que l'on utilise Fi et Vist-V < G/10 si on a précédemment utilisé F0 et si le rapport des valeurs instantanées extremes à la valeur moyenne d'une grandeur de mesure ne dépasse pas la valeur limite prédéterminée de l'intervalle de temps variable par exemple (Rmax-Rmin)/Rmittel < 0,02 pour le calcul de s0 et pour les autres paramètres et pour toutes les quartre autres grandeurs de mesure on procède de la même manière ou de la façon analogue, et on forme la valeur moyenne de s0, et (1-1/B0)/F0 seulement avec des grandeurs de mesure à l'intérieur des valeurs limites qui peuvent être respectées dans le cas d'un comportement suffisamment stationnaire, ainsi que pendant l'état stationnaire lors du déplacement de Vist-R > g*s0(I-A) avec I = W ou I = K et ainsi par exemple g>2 on coupe l'alimentation calorifique du circuit de chauffage jusqu'à ce que s'établisse un écart Vist-R, la pompe de circulation étant entrainée de manière intermittente.

**5.** Méthode selon la revendication 1 avec le calcul de la température ambiante, charactérisé en ce que par des variations de la valeur de consigne au cours du premier intervalle de temps, variations qui se produisent dans l'intervalle de temps où un multiple prédéterminé de cet intervalle de temps pour former la valeur moyenne de (Vist) ou (R), avant la fin (S) du premier intervalle de temps et qu'un état stationnaire ne peut plus être établi, on ne calcule pas les paramètres de la caractéristique de chauffage, et l'application de différentes grandeurs de consigne pendant le premier intervalle de temps doit être traitée pour qu'à la valeur de consigne qui se règle avant la fin du premier intervalle de temps, on associe la valeur (W).

**6.** Méthode selon la revendication 1 ou 2, caractérisé en ce que dans le cas de corps de vanne commandé par horloge, de vanne de zone ou installation de commande analogue prévue dans le circuit de chauffage, on effectue sur au moins un échangeur de chaleur des circuits de chauffage sans capteur pour la température de l'air ambiant, la coupure et la mise en oeuvre d'échangeur de chaleur pendant l'intervalle de temps intermédiaire de préférence après les instants te ou tq + (tq-t0), suivant que I0 ou IH-It et dM ont été déterminés, alors que l'on effectue à temps la mise en oeuvre des échangeurs de chaleur pendant l'intervalle de temps intermédiaire, avantageusement, suffisamment à temps, pour que sa charge de chauffage soit prise en compte notamment pour le support et pour le calcul de la température supérieur d'air ambiant Io pour le premier intervalle de temps suivant.

**7.** Méthode selon la revendication 2, charactérisé en ce que pour des générateurs de chaleur à capacité calorifique non négligeable du fluide caloporteur, on met le contenu de l'accumulateur à sa température maximale peu avant le point de mise en oeuvre tS du chauffage rapide.

**8.** Méthode selon la revendication 1 ou 2, charactérisé en ce que sont exclues les étapes de procédé pour déterminer les paramètres adaptés dès que des variations prédéterminées sur les éléments de réglage ou des parasites prédéterminés se présentent ou seulement dans les intervalles de temps intermédiaires de durée minimale prédéterminée et des limites prédéterminées de la température extérieure pour l'adaptation des paramètres de la caractéristique de chauffage.

46

Figur 1

EP 0 308 806 B1

Figur 2

Figur 3

Figur 4

Figur 5

Figur 6

Figur 8

Figur 7

Figur 9

*Figur 10*